(19) Europäisches Patentamt
European Patent Office
Office européen des brevets

(11) **EP 1 647 847 B1**

(12) **EUROPEAN PATENT SPECIFICATION**

(45) Date of publication and mention
of the grant of the patent:
**25.07.2007 Bulletin 2007/30**

(51) Int Cl.:
*G02B 5/30* (2006.01)   *G02F 1/13363* (2006.01)

(21) Application number: **05021800.7**

(22) Date of filing: **06.10.2005**

(54) **Laminated optical film, elliptically polarizing plate, and image viewing display**

Laminierte optische Folie, elliptischer Polarisator und Bildanzeigeeinheit

Film optique stratifié, polarisateur elliptique et dispositif d'affichage d'images

(84) Designated Contracting States:
**DE FI FR GB NL**

(30) Priority: **13.10.2004  JP 2004299094**

(43) Date of publication of application:
**19.04.2006  Bulletin 2006/16**

(73) Proprietor: **NITTO DENKO CORPORATION**
**Ibaraki-shi, Osaka 567-8680 (JP)**

(72) Inventors:
• **Hata, Masahiro**
  **Ibaraki-shi,**
  **Osaka 567-8680 (JP)**
• **Kitamura, Yoshitsugu**
  **Ibaraki-shi,**
  **Osaka 567-8680 (JP)**

(74) Representative: **Müller-Boré & Partner**
**Patentanwälte**
**Grafinger Strasse 2**
**81671 München (DE)**

(56) References cited:
**EP-A- 0 587 890         EP-A- 1 160 591**
**EP-A- 1 300 701         EP-A- 1 489 437**
**WO-A-02/088784         US-B1- 6 417 904**

**Description**

BACKGROUND OF THE INVENTION

Field of the Invention

The present invention relates to a laminated optical film. An optical film of the present invention may be used independently or may be used in combination with other optical films as various optical films, such as retardation films, viewing angle compensation films, optical compensation films, elliptically polarizing plates (including circularly polarizing plates), and brightness enhancement films. A laminated optical film of the present invention is especially useful when it is laminated with polarizing plates to be used as elliptically polarizing plates.

In addition, the present invention relates to an image viewing display such as a liquid crystal display, an organic EL (electroluminescence) viewing display, a PDP using the laminated optical film, the elliptically polarizing plate, and the like. A laminated optical film and an elliptically polarizing plate of the present invention may be applied for various liquid crystal displays etc. as described above, and may be especially suitably used for reflective and transflective type liquid crystal display that can be mounted in portable information and telecommunications instruments, personal computers, etc. It is also suitable for mounting to liquid crystal displays in TN (Twisted nematic) mode, OCB (Optically compensated bend), and homogeneous mode as liquid crystal displays.

Description of the Related Art

Conventionally, many optical films comprising various kinds of polymer materials have been used for the purpose of improving picture-quality in image viewing displays, such as portable information and telecommunications instruments, liquid crystal monitors, liquid crystal televisions, organic EL viewing displays. For example, performing stretching process for polymer films having birefringence produces such optical films. Among them the direction along with the refractive index in the film plane is maximum is defined as the X-axis, a direction perpendicular to the X-axis as the Y-axis, the thickness direction of the film as the Z-axis, and refractive indices in each axial direction are defined as nx, ny, nz, respectively, an optical film wherein an Nz coefficient expressed by a formula of $(nx - nz) / (nx - ny)$ is controlled preferably be used in order to widen a viewing angle of image viewing displays, such as the above-mentioned liquid crystal displays.

An Nz coefficient preferable for optical films depends upon modes (TN, VA, OCB, IPS modes, etc.) of the liquid crystal displays. Therefore, in order to obtain optical films having a required Nz coefficient polymer materials having superior film workability and birefringence that may easily be controlled into a desired Nz coefficient are suitably selected for use. For example, since optical films satisfying Nz coefficient $\leq 0.9$ control indices of refraction to be at least nz > ny, polymer materials having such indices of refraction and developing birefringence are suitably used.

Since optical films satisfying Nz coefficient $\leq 0.9$ advantageously developing superior birefringence, for example, they are obtained by stretching polycarbonate resin films including a unit of 2,2-bis (4-hydroxyphenyl) propane as polymer films (See Japanese Patent Laid-Open No. 5-157911 official report). The polycarbonate resins are preferable from a viewpoint of having high transparency and moderate heat resistance. However, optical films obtained by stretching of polycarbonate resin films have a large birefringence change when stress is applied; that is, they have a large absolute value of photoelastic coefficient. Therefore, there occurs a problem that the optical films easily cause a large degree of unevenness when they are adhered to polarizing plates. Moreover, in recent years, upsizing of liquid crystal panels, such as in liquid crystal televisions, increases stress that works on panels, and therefore optical film materials having smaller change of retardation (change of birefringence) is increasingly required. Moreover, the optical films have such problems that exhibit large retardation variation, under use environment after adhered onto viewing displays. Since they had this problem, the optical films were not suitable for application in recent years wherein high heat resistance, and high temperature and high moisture resistance were required.

On the other hand, as polymer materials having a comparatively small absolute value of photoelastic coefficient, for example, norbornene resins are known (See Japanese Patent Laid-Open No. 2000-56131 official report). However, although the norbornene resins have a small absolute value of photoelastic coefficient, they simultaneously show a characteristic to have a small birefringence, providing a limitation to retardation given by stretching process. Especially, control of three dimensional refractive index satisfying Nz coefficient $\leq 0.9$ is difficult.

Conventionally, broadband retardation plates are suitably used that have functions as a quarter wavelength plate or a half wavelength plate with respect to incident light with wavelength area of broadband (visible light range) for reflective and transflective type liquid crystal displays etc. As this broadband retardation plates, laminated films obtained by laminating two or more polymer films having optical anisotropy in a state of optical axes being intersected with each other are proposed. In these laminated films, broadband characteristics are realized by making optical axes of two-layered or two or more sheets of stretched films intersect with each other (for example, refer to Japanese Patent Laid-Open Publication No. 5-100114, Japanese Patent Laid-Open Publication No. 10-68816, Japanese Patent Laid-Open Publication No. 10-90521).

However, even when the broadband retardation plates described in the above-mentioned Patent Literatures are used, there is a defect of gradation inversion wherein observation of displayed picture in diagonal (upward, downward, right-hand and left-hand) directions with respect to normal line of a screen varies hue of the displayed picture, or gives inversion between white images and black images.

Publication EP 1 489 437 A1 discloses an optical laminate having specified photoelastic coefficient and front retardation, plus two other films having positive and negative uniaxial property, respectively.

The present invention aims at providing an optical film that enables inhibition of coloring of display image for observation of a display picture in a diagonal direction to normal line of a screen, and enables display of an image having little gradation inversion areas, and that has outstanding durability.

The present invention also aims at providing an elliptically polarizing plate laminating the optical film and a polarizing plate.

Furthermore, the present invention aims at providing an image viewing display using the optical film or the elliptically polarizing plate.

As a result of wholehearted research made by the present inventors in order to solve the above-mentioned problems, it was found out that the object might be attained using a following laminated optical film, thus leading to completion of the present invention.

That is, the present invention relates to a laminated optical film comprising the structural features recited in claim 1.

A laminated optical film of the present invention is obtained by laminating the first optical film (1) having a controlled three dimensional refractive index, the second optical film (2) showing optically positive uniaxial property and the third optical film (3) formed of a material showing optically negative uniaxial property is tilted, which is useful as a broadband retardation film enabling compensation of wide viewing angles. Image viewing displays in which the laminated optical films are applied, such as liquid crystal displays, enable realization of wide viewing angle, and also enable controlled display coloring and image having little gradation inversion area for observation in diagonal directions with respect to display screens.

The first optical film (1) uses polymer films including styrene resins in addition to polycarbonate resins. Blending of the styrene resins enables control of the absolute value of photoelastic coefficient of optical film within a range of 2.0 $\times$ 10$^{-11}$ to 6.0 $\times$ 10$^{-11}$ m$^2$/N, leading to excellent durability. Therefore, when the optical film concerned is applied to large-sized panels, it gives little change of retardation values under stress-applied conditions, and it is suitably used also in application, for example, requiring high heat resistance, and high temperature and high moisture resistance. The absolute value of photoelastic coefficient is preferably 3.0 $\times$ 10$^{-11}$ to 5.0 $\times$ 10$^{-11}$ m$^2$/N. The absolute value of photoelastic coefficient exceeding 6.0 $\times$ 10$^{-11}$ m$^2$/N gives insufficient durability, and also large retardation change under stress-applied conditions. On the other hand, the absolute value of photoelastic coefficient of less than 2.0 $\times$ 10$^{-11}$ m$^2$/N gives inferior processability in stretching, and disadvantageously makes control of an Nz coefficient difficult. Moreover, since the optical films have polycarbonate resins as a principal component, it has excellent expression and controllability of birefringence based on polycarbonate resins. And, polycarbonate resins and styrene resins have excellent mutual compatibility, giving high transparency to the resulting optical film.

In the first optical film (1), an Nz coefficient defined above satisfies Nz ≤ 0.9, and, as a result, has a wide viewing angle characteristic. An Nz coefficient of Nz > 0.9 makes development of a wide viewing angle difficult. A smaller Nz coefficient is more preferable, and preferably satisfies Nz ≤ 0.7, and more preferably Nz ≤ 0.5. In addition, in the optical films, a case of $(nx_1 - nz_1) < 0$ may be included and an Nz coefficient may have negative values. And in consideration of expansion of viewing angles in four (upward, downward, right-hand and left-hand) directions, an Nz coefficient is controlled -1 or more, and preferably -0.5 or more.

Moreover, since a change of front retardation is small, the front retardation (Re) of the first optical film (1) satisfies also a relationship of Re ≥ 80 nm. An Re satisfying a relationship of Re < 80 nm gives greater change in front retardation. Therefore, the Re satisfies Re ≥ 90 nm, and preferably Re ≥ 100 nm. However, in order to acquire smaller change of the thickness direction retardation, it is preferably Re ≤ 300 nm. Moreover, retardation in the thickness direction: $(nx_1-nz_1) \times d_1$ is preferably -300 to 300 nm, and more preferably 0 to 270 nm.

In the laminated optical film, the thickness of the third optical film (3) is also preferably 30 to 90 $\mu$m in excellent durability

In the laminated optical film, the weight average molecular weight of the styrene resins that is materials of the first optical film (1) is preferably 20,000 or less. Besides, the glass transition temperature of the first optical film (1) is preferably in a range of 110 to 180°C.

Moreover, in the laminated optical films, a film obtained by stretching polymer films including norbornene polymers may be used as the second optical film (2). As the second optical film (2), an optical film may be used that is obtained by stretching polymer films including polycarbonate resins and styrene resins, that is same materials as of the first optical film (1) having the absolute value of photoelastic coefficient of $0.5 \times 10^{-11}$ to $6.0 \times 10^{-11}$ m$^2$/N, and preferably of $1.0 \times 10^{-11}$ to $6.0 \times 10^{-11}$ m$^2$/N. The second optical film (2) using these materials has excellent durability.

Materials showing optically negative uniaxial property forming the third optical film (3), in the laminated optical film, it is preferable that the materials are of discotic liquid crystal compounds. Although materials showing optically negative uniaxial property are not especially limited, discotic liquid crystal compounds are suitable, in consideration of easiness of control of angularly alignment and of comparatively common material with a low cost.

Moreover, in the laminated optical film, a material showing optically negative uniaxial property that forms the third optical film (3) is preferably tilted so that the average optical axis and the normal axis the third optical film (3) may make tilt angles in a range of 5° to 50°.

As mentioned above, the third optical film (3) is used as a laminated optical film combined with the first optical film (1) having a controlled three dimensional refractive index, and controlling of the inclining angle of the third optical film (3) to 5° or more can provide large viewing angle expansion effect when mounted in liquid crystal displays etc. On the other hand, controlling of the tilt angle to 50° or less may provide excellent viewing angles in any of four (upward, downward, right-hand and left-hand) directions, and thereby change of viewing angle quality depending on viewing directions can be suppressed. Based on such reasons, the tilt angle is preferably in a range of 10° to 30°.

In addition, the optical material showing optically negative uniaxial property (for example, discotic liquid crystalline molecule) may be in a state of uniform tilted alignment where alignment may not vary in connection with a distance from a film plane, or may vary in connection with a distance between the optical material and a film plane.

In the laminated optical film, a configuration wherein the first optical film (1) having a controlled three dimensional refractive index is disposed between the second optical film (2) showing optically positive uniaxial property and the third optical film (3) formed of a material showing optically negative uniaxial property is tilted, can realize a wide viewing angle, which is preferable in order to suppress more effectively gradation inversion areas when observed from diagonal directions.

Moreover, the present invention relates to an elliptically polarizing plate comprising the laminated optical film and a polarizing plate. As the elliptically polarizing plate, a film is preferable that has a polarizing plate laminated on the second optical film (2) side thereof, from viewpoint point of realization of a wide viewing angle and improvement in gradation inversion area when observed in diagonal directions.

Furthermore, the present invention relates to an image viewing display comprising the laminated optical film or the elliptically polarizing plate. As image viewing displays, it may suitably be applied to liquid crystal displays in TN mode, OCB, and homogeneous mode.

Fig.1 is one embodiment of a sectional view of a laminated type optical film of the present invention;
Fig.2 is one embodiment of a sectional view of a laminated type optical film of the present invention;
Fig.3 is one embodiment of a sectional view of a laminated type optical film of the present invention;
Fig.4 is one embodiment of a sectional view of an elliptically polarizing plate of the present invention;
Fig.5 is one embodiment of a sectional view of an elliptically polarizing plate of the present invention;
Fig.6 is one embodiment of a sectional view of an elliptically polarizing plate of the present invention;
Fig.7 is one embodiment of a sectional view of an elliptically polarizing plate of a comparative Example;
Fig.8 is one embodiment of a sectional view of an elliptically polarizing plate of a comparative Example;
Fig.9 is one embodiment of a sectional view of an elliptically polarizing plate of a comparative Example; and
Fig. 10 is a sectional view of an example of a reflective transflective type liquid crystal display of an example.

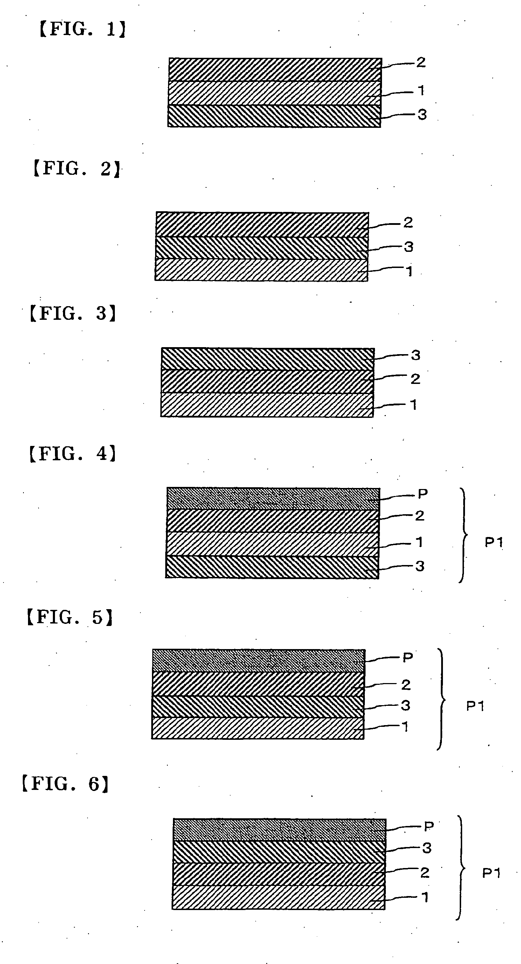

Laminated optical film of the present invention will, hereinafter, be described with reference to Figures. As shown in Fig.1 to 3, a first optical film (1) having a controlled three dimensional refractive index, a second optical film (2) showing optically positive uniaxial property, and a third optical film (3) formed of a material showing optically negative uniaxial property are laminated together in a laminated optical film of the present invention. An order of lamination of these optical films is not especially limited. In Fig.1, optical films are laminated in an order of the second optical film (2) / the first optical film (1) / the third optical film (3); in Fig.2, in an order of the second optical film (2) / the third optical film (3) / the first optical film (1); and in Fig.3, in order of the third optical film (3) / the second optical film (2) / the first optical film (1), respectively. Above all, an arrangement of lamination as shown in Fig.1 is preferable.

Moreover, a polarizing plate (P) may be laminated on the laminated optical film to obtain an elliptically polarizing plate. In Fig.4 to Fig.6, elliptically polarizing plates (P1) were shown a polarizing plate (P) laminated on the laminated optical films shown in Fig.1 to Fig.3. In addition, a position of lamination of the polarizing plate (P) to the laminated optical film is not especially limited, as shown in Fig.4 to Fig. 5, the polarizing plate (P) is preferably laminated on the side of the second optical film (2) so that a larger viewing angle is obtained when mounted to a liquid crystal display. Especially, a case of Fig.4 is preferable.

In addition, in Fig. 1 to Fig.6, each optical film and polarizing plate may be laminated through pressure sensitive adhesive layers. A number of pressure sensitive adhesive layers used may be one; two or more layers may be superposed.

The first optical film (1) is stretching film (retardation film) obtained by stretching a polymer film including polycarbonate resins and styrene resins.

Various kinds of polycarbonate resins used for optical films may be used without any special limitation. As polycarbonate resins, for example, aromatic polycarbonates consisting of aromatic series dihydric phenol components and carbonate components are preferable.

Aromatic polycarbonates can be usually obtained by a reaction of an aromatic dihydric phenol compound with a carbonate precursor. That is, aromatic polycarbonates can be obtained by means of a phosgene method in which phosgene is blown into an aromatic dihydric phenol compound in the presence of caustic alkali and a solvent, or an ester exchange method in which an aromatic dihydric phenol compound and bis(aryl carbonate) are subjected to ester exchange in the presence of a catalyst.

As operative example of carbonate precursor preferably used are: phosgene, bischloroformate of the dihydric phenols, diphenyl carbonate, di-p-tolyl carbonate, phenyl-p-tolyl carbonate, di-p-chloro phenyl carbonate, dinaphthyl carbonate, etc. Phosgene and diphenyl carbonate are especially preferable.

As examples of aromatic series dihydric phenolic compounds, which is reacted with the carbonate precursor, there may be used: 2,2-bis(4-hydroxy phenyl)propane, 2,2-bis(4-hydroxy-3,5-dimethyl phenyl)propane, bis(4-hydroxy phenyl)methane, 1,1-bis(4-hydroxy phenyl)ethane, 2,2-bis(4-hydroxy phenyl)butane, 2,2-bis(4-hydroxy-3,5-dimethyl phenyl)butane, 2,2-bis(4-hydroxy-3,5-dipropyl phenyl)propane, 1,1-bis(4-hydroxy phenyl)cyclohexane, 1,1-bis(4-hydroxy phenyl)-3,3,5-trimethylcyclohexane, and others. These may be used independently, and two or more kinds may be used in combination. Among them, 2,2-bis(4-hydroxy phenyl)propane, 1,1-bis(4-hydroxy phenyl)cyclohexane, and 1,1-bis(4-hydroxy phenyl)-3,3,5-trimethyl cyclohexane are preferable. Especially, combined use of 2,2-bis(4-hydroxy phenyl)propane and 1,1-bis(4-hydroxy phenyl)-3,3,5-trimethyl cyclohexane is preferable.

In a case where 2,2-bis(4-hydroxyphenyl)propane and 1,1-bis(4-hydroxyphenyl)-3,3,5-trimethylcyclohexane are both used as aromatic dihydric phenol compounds, the absolute value of photoelastic coefficient and Tg of the first optical film (1) can be adjusted by altering a ratio in usage of both compounds. With a higher content of 1,1-bis(4-hydroxyphenyl)-3,3,5-trimethylcyclohexane in a polycarbonate resin adopted, Tg can be raised and the absolute value of the photoelastic coefficient can be reduced. In the first optical film (1), a content ratio of 2,2-bis(4-hydroxyphenyl) propane and 1,1-bis(4-hydroxyphenyl)-3,3,5-trimethylcyclohexane in a polycarbonate resin is preferably in the range of from 2:8 to 8:2 in order to sufficiently reduce the absolute value of the photoelastic coefficient and secure Tg and a rigidity suitable for durability, self-supportability, stretchability and the like. More preferable is a content ratio therebetween in the range of from 3:7 to 6:4. Especially preferable is a content ratio therebetween in the range of from 3:7 to 5:5.

The weight average molecular weight (Mw) of the polycarbonate resin is preferably in the range of from 25,000 to 200,000 in terms of polystyrene measured according to the GPC method with tetrahydrofuran as a developing solvent. More preferably is the weight average molecular weight thereof in the range of from 30,000 to 150,000. Further more preferably is the weight average molecular weight thereof in the range of from 40,000 to 100,000. Especially preferably is the weight average molecular weight thereof in the range of from 50,000 to 80,000. With the weight average molecular weight of the polycarbonate resin in the ranges adopted, the first optical film (1) excellent in mechanical strength can be obtained

On the other hand, a styrene resin used in the invention is a styrene-based polymer obtained by polymerization of a styrene-based monomer. Concrete examples of the styrene-based monomer include: styrene, α-methylstyrene, 2,4-dimethylstyrene and the like. Besides, styrene resins sold on the market can also employed. The example of the styrene resins include: styrene resin, acrylonitrile-styrene resin, acrylonitrile-butadiene-styrene resin, acrylonitrile-ethylene-styrene resin, styrene-maleimide copolymer, styrene-maleic anhydride copolymer and others. The styrene resins may be used alone or in combination of two or more kinds. A styrene resin and a styrene-based monomer may be used in combination.

The weight average molecular weight (Mw) of styrene resin described above is preferably 20,000 or less in terms of polystyrene measured according to the gel permeation chromatograph (GPC) method with tetrahydrofuran as a developing solvent. More preferably is the weight average molecular weight thereof in the range of from 1,000 to 10,000. Especially preferably is the weight average molecular weight thereof in the range of from 1,000 to 6,000. Most preferably is the weight average molecular weight thereof in the range of from 1,000 to 3,000. With the weight average molecular weight thereof in the ranges adopted, styrene resin and polycarbonate resin are homogeneously mixed, thereby enabling a film high in transparency to be obtained.

A ratio of polycarbonate resin and styrene resin is properly adjusted so that a polymer film (the first optical film (1)) has good transparency and the absolute value of photoelastic coefficient in the ranges. Relative to 100 parts by weight of a total amount of polycarbonate resin and styrene resin, a content of styrene resin is preferably in the range of 20 to 40 parts by weight. More preferably is a content of styrene resin in the range of 22 to 38 parts by weight. Especially preferably is a content of styrene resin in the range of 25 to 35 parts by weight. Styrene resin is employed in order to reduce the absolute value of the photoelastic coefficient of the first optical film (1) of the invention. With styrene resin in the ranges adopted, the absolute value of photoelastic coefficient of the first optical film(1) is sufficiently reduced and can simultaneously secure the glass transition temperature (also referred to as Tg) and rigidity suitable for durability, self-supportability and stretchability; therefore, it can be made compatible in liquid crystal display that not only a shift and unevenness in retardation is difficult to occur due to a stress, but a retardation film having a relation of $nx_1 > nz_1 > ny_1$ at a low stretch ratio is obtained.

A content of styrene resin of the first optical film (1) of the invention can be obtained by using measurement with GPC. To be concrete, the first optical film(1) is dissolved into tetrahydrofuran to prepare a 0.1 wt % solution, the solution is left at rest overnight and then, a filtrate obtained with a membrane filter of pore size of 0.45 $\mu$m is subjected to a GPC measurement. An obtained differential molecular weight distribution curve can be divided into tow parts at the valley between the peak of the low molecular weight component and the peak of the high molecular weight component. A content of styrene resin can be obtained by calculation of the equation: [the total area of peak of row molecular weight component/(the total area of peak of row molecular weight component + the total area of peak of high molecular weight component)] $\times$ 100.

Polycarbonate resin and styrene resin are employed so that a difference in weight average molecular weight between the resins (Mw of a polycarbonate resin - Mw of styrene resin) is preferably in the range of from 24,000 to 92,000. More preferably is a difference therebetween in the range of 29,000 to 87,000. Especially preferably is a difference therebetween in the range of 39,000 to 77, 000. Most preferably is a difference therebetween in the range of 49,000 to 67,000. With a difference therebetween in the ranges adopted, a polymer film high in transparency can be obtained.

A thickness of polymer film containing polycarbonate resin and styrene resin, which can be selected depending on a retardation value and stretchability of a design, easiness to generate retardation and the like, is preferably in the range of 20 to 500 $\mu$m. More preferably is a thickness thereof in the range of from 30 to 300 $\mu$m. Especially preferable is a thickness thereof in the range of from 40 to 100 $\mu$m. Most preferably is a thickness thereof in the range of from 50 to 80 $\mu$m. With a thickness thereof in the ranges adopted, sufficient self-supportablity of the film can be obtained to thereby enable retardations in the wide range to be ensured.

A light transmittance of the polymer film described above is preferably 80% or more at a wavelength of 590 nm. More preferably is a light transmittance thereof 85% or more. Especially preferably is a light transmission thereof 90% or more. A light transmittance of the obtained first optical film (1) is also preferably similar to the values.

No specific limitation is placed on the glass transition temperature (Tg) of the polymer film described above, but it is preferably in the range of 110 to 185°C. More preferably is the glass transition temperature thereof in the range of from 120 to 170°C. Especially preferably is the glass transition temperature thereof in the range of from 125 to 150°C. If Tg is 110°C or more, it is ease to obtain a film good in thermal stability, while if Tg is 185°C or less, retardation values in a film surface and in the thickness direction is easier to controlled by stretching a film. The glass transition temperature (Tg) can be obtained with the DSC method according to JIS K 7121.

The polymer film described above can be obtained by means of casting method from solution or melt extrusion method, which has been generally adopted. The polymer film described above can be obtained by mixing styrene resin and polycarbonate-resin. No specific limitation is placed on a resin mixing method, and for example in a case where the film is prepared with the casting method, resins in a given ratio are stirred and mixed in a solvent to prepare a homogeneous solution for use. In a case where a melt extrusion method is employed to prepare the film, resins can be used by melt mixing resins at a given ratio. In order to enhance smoothness of the first optical film (1) and obtain a good optical homogeneity, a casting method from solution is preferably used.

Examples of solvents used in casting method include: aromatic hydrocarbons such as benzene, toluene, xylene, methoxybenzene and 1,2-dimethoxybenzene;hydrocarbon halides such as chloroform, dichloromethane, carbon tetrachroride, dichloroethane, tetrachloroethane, trichloroethylene, tetrachloroethylene chlorobenzene and ortho-dichlorobenzene; phenols such as phenol and para-chlorophenol; ethers such as diethyl ether, dibutyl ether, tetrahydrofuran, anisol, dioxane and tetrahydrofuran; ketones such as acetone, methyl isobutyl ketone, methyl ethyl ketone, cyclohexanone, cyclopentanone, 2-pentanone, 3-pentanone, 2-hexanone, 3-hexanone, 2-heptanone, 3-heptanone, 4-heptanone, 2,6-dimethyl-4-heptanone, 2-pyrrolidone and N-methyl-2-pyrrolidone; alcohols such as n-butanol, 2-butanol, cyclohexanol, isopropyl alcohol, t-butyl alcohol, glycerin, ethylene glycol, triethylene glycol, ethylene glycol monomethyl ether, diethylene glycol dimethyl ether, propylene glycol and dipropylene glycol and 2-methyl-2,4-pentane diol; amides such as dimethylformamide and dimethylacetoamide; nitriles such as acetonitrile and butyronitrile; cellosolves such as methyl cellosolve and methyl acetate cellosolve; esters such as ethyl acetate, butyl acetate and methyl lactate; in addition, methylene chloride, carbon disulfide, ethyl cellosolve, butyl cellosolve and the like, to which no specific limitation is placed as a solvent.

Preferable as the solvents are dichloromethane, chloroform, 1,2-dichloroethane, cyclopentanone, cyclohexanone, methyl isobutyl ketone, methyl ethyl ketone, diglyme, toluene, ethyl acetate, tetrahydrofuran, 1,3-dioxolane, 1,4-dioxane and chlorobenzene. More preferable are tetrahydrofuran or dichloromethane because of good solubility and dope stablity. The solvents can also be used either alone or in mixture of two or more kinds.

A total solid content in solution used in the casting method, which is different according to a solubility of resin, a coating viscosity, wettability on substrate, a thickness after coating or the like, is preferably in the range of from 2 to 100 parts by weight, more preferably in the range of from 4 to 50 parts by weight and especially preferably in the range of from 5 to 40 parts by weight relative to 100 parts by weight of a solvent in order to obtain the polymer film high in smoothness.

The polymer film used in the invention may contain a residual solvent, a stabilizer, a plasticizer, and an ultraviolet absorbent, an antistatic agent and other components when required in the range in which the object of the invention is not impaired.

Then, description will be given of a fabrication method for the first optical film(1) of the invention. A fabrication method for the first optical film(1) of the invention is such that a shrinkable film is adhered on one surface or both surfaces of the polymer film described above containing styrene resin and polycarbonate resin, followed by heat stretching.

A shrinkable film is employed in order to impart a contractile force in a direction perpendicular to the stretching direction in the heat stretching. To be concrete, a biaxially stretched film, a uniaxially stretched film or the like can be exemplified. Materials used in the shrinkable film described above are polyester, polystyrene, polyethylene, polypropylene, polyvinyl chloride, polyvinylidene chloride and the like, to which no limitation is placed. A biaxially stretched polypropylene film is preferably used because of excellent shrinkage evenness and heat resistance.

The polymer film to be laminated that shrinks at 5% or more as a shrinkage percentage in the transverse direction thereof is preferably used as the shrinkable film. The shrinkable film is preferably in the range of from 2.7 to 9.4% in shrinkage percentage in the machine direction S(MD) of the film at 140°C and in the range of from 4.6 to 15.8% in shrinkage percentage in the transverse direction S(TD) of the film at 140°C. More preferably used is the shrinkable film in the range of from 2.7 to 8.7% in S(MD) of the film and in the range of from 4.6 to 10.6% in S(TD) of the film. Especially preferably used is the shrinkable film in the range of from 3.7 to 7.7% in S(MD) of the film and in the range of from 5.6 to 9.6% in S(TD) of the film. Most preferably used is the shrinkable film in the range of from 4.7 to 6.7% in S(MD) of the film and in the range of from 6.6 to 8.6% in S(TD) of the film.

The shrinkable film is preferably in the range of from 0.1 to 3.9% in difference between shrinkage percentages in the transverse direction and the machine direction $\Delta S = S(TD) - S(MD)$. More preferably is a difference in shrinkage percentages in the range of 0.9 to 2.9%. Especially preferably is a difference in shrinkage percentages in the range of 1.4 to 2.4%. Most preferably is a difference in shrinkage percentages in the range of 1.8 to 2.1%. If a shrinkage percentage in the MD direction is large, a contractile force of the shrinkable film together with a stretching tension acts on a stretching machine, which makes it difficult to achieve uniform stretching. With the range of the difference in shrinkage percentages adopted, uniform stretching can be realized without imposing an excessive load on a facility such as a stretching machine.

Shrinkage percentages S(MD) and S(TD) can be obtained according to a heat shrinkage percentage A method of JIS Z 1712 (from which the measurement is different in that a heating temperature is set to 140°C instead of 120°C and a load of 3 g is imposed on a test piece). To be concrete, 5 test pieces with a size of 20 mm in width and 150 mm in length are sampled in each of the longitudinal direction and the lateral direction, and reference marks are attached at both ends of a distance which is spaced from each other by about 100 mm in the middle portion of each test piece. A test piece is vertically hung with a load of 3 g imposed in a space of an air circulation thermostatic oven held at a temperature of 140°C $\pm$ 3°C and in this state, heated for 15 min, thereafter taken out of the oven, left at rest for 30 min in a standard state (room temperature), a distance between the reference marks is measured with a calipers defined in JIS B 7507 to thereby obtain the average of 5 measured values and to calculate a shrinkage percentage S(MD) or S(TD) using the equation given by S(%) = [(a distance between the reference marks before the heating (mm) - a distance between the reference marks after the heating)/(a distance between the reference marks before the heating (mm)] $\times$ 100.

A range of preferable thickness of the shrinkable film can be selected depending on the shrinkage percentage, and a retardation value, and for example, is preferably from 10 to 500 $\mu$m, more preferably from 20 to 300 $\mu$m, particularly preferably from 30 to 100 $\mu$m, most preferably from 40 to 80 $\mu$m. When the thickness is in the above range, a sufficient shrinkage percentage is obtained, and the first optical film(1) having excellent optical uniformity can be prepared.

A method of applying the shrinkable film on the polymer film is performed so that a shrinking direction of the shrinkable film includes a direction perpendicular to at least stretching direction. That is, the method is performed so that all or a part of a contractile force of the shrinkable film exerts in a direction perpendicular to a stretching direction of the polymer film. Therefore, a shrinking direction of the shrinkable film may be inclined relative to a stretching direction of the polymer film, and does not necessarily need to be in a completely perpendicular direction.

A method of applying the shrinkable film is not particularly limited, but a method of adhesion by providing a pressure-sensitive adhesive layer between the polymer film and the shrinkable film is preferable in that productivity is excellent. The pressure-sensitive adhesive layer can be formed on one or both of the polymer film or the shrinkable film. Usually, since the shrinkable film is peeled after the first optical film(1) is prepared, as the pressure-sensitive adhesive, a pressure-sensitive adhesive which is excellent in adhesive strength and heat resistance in a heat-stretching step, and can be easily peeled at a peeling step thereafter, and in which a pressure-sensitive adhesive does not remain on a surface of the first optical film(1), is preferable. It is preferable that the pressure-sensitive adhesive layer is arranged on the shrinkable film in that release property is excellent.

As a pressure-sensitive adhesive forming the pressure-sensitive adhesive layer, an acrylic resin series, a synthetic rubber series, a rubber series and a silicone series are used. An acryl-based pressure-sensitive adhesive comprising an acryl-based polymer as a base polymer is preferable in that it is excellent in adhesive strength, heat resistance and release property. The weight average molecular weight (Mw) of the acryl-based polymer, in which calculated by a GPC method as expressed by polystyrene conversion measured by a GPC method, is preferably 30,000 to 2,500,000.

As a monomer used in the acrylic resin-based polymer, various alkyl (meth)acrylates can be used. Examples include (meth)acrylic acid alkyl esters (e.g. alkyl esters having 1 to 20 carbon atoms such as methyl ester, ethyl ester, propyl ester, butyl ester, 2-ethylhexyl ester, isooctyl ester, isononyl ester, isodecyl ester, dodecyl ester, lauryl ester, tridecyl ester, pentadecyl ester, hexadecyl ester, heptadecyl ester, octadecyl ester, nonadecyl ester, and eicosyl ester), and these can be used alone or in a combination of them.

In addition, in order to impart polarity to the resulting acrylic resin-based polymer, a carboxyl group-containing monomer such as (meth)acrylic acid and itaconic acid; a hydroxyl group-containing monomer such as hydroxyethyl (meth)acrylate, and hydroxypropyl (meth)acrylate; an amido group-containing monomer such as N-methylolacrylamide; a cyano group-containing monomer such as (meth)acrylonitrile; an epoxy group-containing monomer such as glycidyl (meth)acrylate; vinyl esters such as vinyl acetate; a styrene-based monomer such as styrene, and $\alpha$-methylstyrene together with the aforementioned (meth)acrylic acid alkyl ester can be used as a copolymerization monomer.

In addition, a method of polymerizing the acrylic resin-based polymer is not particularly limited, but the known polymerization method such as solution polymerization, emulsion polymerization, suspension polymerization, and UV polymerization can be adopted.

In addition, the pressure-sensitive adhesive can contain a crosslinking agent. Examples of the crosslinking agent include a polyisocyanate compound, a polyamine compound, a melamine resin, a urea resin, and an epoxy resin. Further, if necessary, a catalyst, a tackifier, a plasticizer, a filler, an antioxidant agent, a ultraviolet-ray absorbing agent, and a silane coupling agent may be appropriately used in the pressure-sensitive adhesive agent.

A method of forming the pressure-sensitive adhesive layer is not particularly limited, but examples include a method of coating a pressure-sensitive adhesive on a releasing film, drying this, and transferring this onto the polymer film that is transferring method, and a method of directly coating a pressure-sensitive adhesive on the polymer film, and drying this that is direct transferring method.

A preferable thickness range of the pressure-sensitive adhesive layer is not particularly limited, but is appropriately determined depending on a pressure-sensitive adhesive strength and the surface state of the first optical film (1). For example, the range is preferably from 1 to 100 $\mu$m, further preferably from 5 to 50 $\mu$m, particularly preferably from 10 to 30 $\mu$m. When the thickness is in the aforementioned range, a sufficient shrinkage percentage is obtained, and the first optical film (1) having excellent optical uniformity can be prepared. As the pressure-sensitive adhesive layer, pressure-sensitive adhesive layers having different compositions or different kinds may be used by laminating them. In addition, if necessary, natural or synthetic resins such as a tackifier for the purpose of controlling an adhesive strength, and appropriate additives such as an antioxidant can be incorporated into the pressure-sensitive adhesive layer.

An exposed surface of the pressure-sensitive adhesive layer is covered with provisionally applying a releasing paper or a releasing film (also referred to as separator) until practical use, for the purpose of preventing its stain. Thereby, contact with a pressure-sensitive adhesive layer in the conventional handling state can be prevented. As the separator, for example, an appropriate separator as usual such as a separator obtained by coating-treating an appropriate thin film such as a plastic film, a rubber sheet, a paper sheet, a fabric, a non-woven fabric, a net, a foamed sheet, a metal foil, and a laminate thereof with an appropriate releasing agent such as a silicone series, a long chain alkyl series, a fluorine series and molybdenum sulfide can be used.

An adhesive strength at an interface at 23°C between the polymer film and a pressure-sensitive adhesive layer is not particularly limited, but is preferably from 0.1 to 10 N/50 mm, more preferably from 0.1 to 5 N/50 mm, particularly preferably from 0.2 to 3 N/50 mm. The adhesive strength can be measured by pressing the aforementioned shrinkable film on the polymer film by three reciprocations with a manual roller according to JIS Z 0237 to obtain a sample for measuring an adhesive strength, the sample being subject to autoclave-treating (50°C, 15 min, 5 kg/cm$^2$), and measuring the adhesive strength with an apparatus according to JIS B 7721 by a 90 degree separating method (lifting rate: 300 mm/min) according to JIS Z 0237. The aforementioned adhesive strength can be attained by performing one or more kinds of appropriate systems such as a system of subjecting a surface on which a pressure-sensitive adhesive layer of the polymer film is set to appropriate treatment such as corona treatment and plasma treatment to control an adhesive strength with a pressure-sensitive adhesive layer, and a system of performing appropriate treatment such as heat treatment and autoclave treatment to control an adhesive strength in the state where the polymer film and the shrinkable film are adhered.

The shrinkable film can be adhered on one side or both sides of the polymer film at an appropriate number such as one or more depending on a designed contractile force. When the film is adhered to both sides, or a plurality of films are adhered to one side, shrinkage percentages of shrinkable films on a surface and a back, or at an upper position and a lower position may be the same or different.

A method of performing the aforementioned heat-stretching is not particularly limited, but the previously known stretching treatment method can be used as far as it is a method which can impart a tensile force in a stretching direction of the polymer film, and a contractile force in a direction perpendicular to the stretching direction. Examples thereof include a longitudinal uniaxial stretching method, a transverse uniaxial stretching method, a longitudinal and transverse simultaneous biaxial stretching method, and a longitudinal and transverse sequential biaxial stretching method. The stretching treatment method can be performed by using an appropriate stretching machine such as a roll stretching machine, a tenter and a biaxial stretching machine. The heat-stretching may be performed by dividing into two or more times steps. A direction of stretching the polymer film may be a film machine direction (MD direction), or transverse direction (TD direction). Alternatively, the direction may be a diagonal direction using a stretching method described in Fig. 1 of JP-A-2003-262721.

A heat-stretched temperature (also referred to as stretching temperature) is preferably not lower than the glass transition temperature (Tg) of the polymer film in that a retardation value of the first optical film (1) easily becomes uniform, and hard to crystallize or whiten a film. The stretching temperature is preferably Tg +1°C to Tg+30°C of the polymer film, more preferably Tg+2°C to Tg+20°C, further preferably Tg+3°C to Tg+15°C, particularly preferably Tg+5°C to Tg+10°C. When a stretching temperature is in the above range, uniform heat-stretching can be performed. When the stretching temperature is constant in a film transverse direction, the first optical film (1) having excellent optical uniformity and having a small unevenness of a retardation value can be prepared.

A specific method of retaining the stretching temperature constant is not particularly limited, but examples include the known heating or cooling method, and temperature controlling method using an air circulation thermostatic oven circulating the hot air or the cold air, a heater utilizing a microwave or far infrared-ray, and a roll, a heat pipe roll and a metal belt which are heated or cooled for temperature control.

When the stretching temperature varies widely, a stretching unevenness becomes large, leading to an unevenness of a retardation value of the finally obtained first optical film (1). Therefore, a smaller variation of temperatures in a film transverse direction is preferable. It is desirable that a temperature variation in plane direction is preferably in a range of $\pm 1$°C or less.

A stretching ratio at the heat-stretching is determined by a content of styrene resin in the polymer film to be used, a kind of a volatile component, a remaining amount of a volatile component, and a designed retardation value, being not limiting. For example, the stretching ratio is preferably from 1.05 to 2.00-fold times, more preferably from 1.10 to 1.5 times, particularly preferably from 1.20 to 1.40 times, and most preferably from 1.25 to 1.30 times. With a stretch ratio in the ranges adopted, the first optical film (1) can be provided that is small in shrinkage of film width, which is hard to be torn in the stretch direction and excellent in mechanical strength. No specific limitation is placed on a thickness $(d_1)$ of the optical film obtained by stretching, but a thickness $(d_1)$ thereof is preferably in the range of from 1 to 150 $\mu$m and more preferably in the range of from 5 to 50 $\mu$m.

A supplying rate at stretching is not particularly limited, but is preferably 0.5 m/min or higher, more preferably 1 m/min or higher from a viewpoint of a machine precision and stability of a stretching apparatus.

As the second optical film (2) showing optically positive uniaxial property, films satisfying $nx_2 > ny_2 \cong nz_2$ may be used without any limitation, where the direction along with the refractive index in the film plane is maximum is defined as the X-axis, a direction perpendicular to the X-axis as the Y-axis, the thickness direction of the film as the Z-axis and where refractive indices in each axial direction are defined as $nx_2$, $ny_2$, and $nz_2$, respectively. A material showing optically positive uniaxial property shows a material having a refractive index in a principal axis in one direction larger than refractive indices in other two directions in the three dimensional optical indicatrix.

The second optical film (2) showing optically positive uniaxial property may be obtained by, for example, uniaxial stretching of a polymer film in a planar direction. As polymers for forming the second optical film (2), for example, there may be mentioned: polycarbonate, polyolefines such as polypropylene, polyesters such as polyethylene terephthalate and polyethylene naphthalate, norbornene polymers, polyvinyl alcohols, polyvinyl butyrals, polymethyl vinyl ethers, poly hydroxy ethyl acrylates, hydroxyethyl celluloses, hydroxy propylcelluloses, methyl celluloses, polyarylates, polysulfones, polyethersulfones, polyphenylene sulfides, polyphenylene oxides, polyaryl sulfones, polyvinyl alcohols, polyamides, polyimides, polyvinyl chlorides, cellulose based polymers, such as triacetyl celluloses, acrylic based polymers, styrene based polymers, and various binary and ternary copolymers of the above-mentioned polymers, graft copolymer, blended polymers. Norbornene polymers are preferable among them. Moreover, an optical film is preferable that is obtained by stretching a polymer film including polycarbonate resins and styrene resins of same materials as in the first optical film (1) to show the absolute value of photoelastic coefficient of $0.5 \times 10^{-11}$ to $6.0 \times 10^{-11}$ m²/N.

As materials for forming the second optical film (2), rod-like nematic liquid crystalline compounds may also be used. Tilted alignment may be given to the rod-like nematic liquid crystalline compounds. A state of tilted alignment may be controlled by a molecular structure, a kind of alignment layer, and use of additives (for example, plasticizers, binders, surface active agents) suitably added in an optical anisotropy layer.

The front retardation $((nx_2 - ny_2) \times d_2$ (thickness: nm)) of the second optical film (2) is preferably 0 to 500 nm, and more preferably 1 to 350 nm. A retardation in the thickness direction $((nx_2 - nz_2) \times d_2)$ is preferably 0 to 500 nm, and more preferably 1 to 350 nm

Although a thickness (d₂) of the second optical film (2) is not especially limited, it is preferably 1 to 200 $\mu$m, and more preferably 2 to 80 $\mu$m.

A material showing optically negative uniaxial property for forming the third optical film (3) shows a material having a refractive index in a principal axis in one direction smaller than refractive indices in other two directions in the three dimensional optical indicatrix.

As materials showing optically negative uniaxial property, for example, liquid crystalline materials, such as polyimide based materials and discotic liquid crystal compounds may be mentioned. Moreover, there may be mentioned films obtained by tilt alignment of the materials, showing optically negative uniaxial property, that include the above-mentioned materials as a principal component and are mixed and reacted with other oligomers or polymers, and by fixing the state. When discotic liquid crystal compounds are used, tilted alignment state of the liquid crystalline molecule may be controlled by a molecular structure thereof, a kind of oriented film, and use of additives (for example, plasticizers, binders, surface active agents) suitably added in an optical anisotropy layer.

The front retardation ((nx₃ -ny₃) $\times$ d₃ (thickness: nm)) of the third optical film (3) is preferably 0 to 200 nm, and more preferably 1 to 150 nm, where the direction along with the refractive index in the film plane of the third optical film (3) is maximum is defined as the X-axis, a direction perpendicular to the X-axis as the Y-axis, the thickness direction of the film as the Z-axis, and where refractive indices in each axial direction are defined as nx₃, ny₃, and nz₃, respectively. A retardation in the thickness direction ((nx₃- nz₃) x d₃) is preferably 10 to 400 nm, and more preferably 50 to 300 nm. The thickness (d₃) of the third optical film (3) is 30 to 90 $\mu$m in viewpoint of durability described above.

Lamination of the first optical film (1) and the third optical film (3) is performed so that a smaller angle made by each slow axis may preferably be 70° to 90°, and more preferably 80° to 90°.

No specific limitation is imposed on a shape of a laminated optical film of the invention, but a shape thereof is preferably rectangular. Moreover, in the case of rectangular shape, no specific limitation is placed on a size of rectangle, but it is preferable that a shorter side is in the range of about from 15 to 150 mm and a longer side is in the range of about from 20 to 200 mm in a case where the laminated optical film is used in mobile phone with a size in the range of about from 1 to 8 inches.

A laminated optical film of the invention can be, as shown in Figs, 4 to 6, an elliptically polarizing plate obtained by laminating polarizing plate (P), while lamination of the polarizing plate (P), the first optical film(1) and the second optical film (2), in a case where the laminated optical film is rectangular, is preferably conducted counterclockwise with the longer side located at 0° in a way described below. It is preferable that an angle formed between the longer side of the laminated optical film and the absorption axis of the polarizing plate is preferably 175° $\pm$ 5°. An angle formed between the longer side of the laminated optical film and the slow axis of the first optical film (1) is preferably 0° $\pm$ 5°. An angle formed between the longer side of the laminated optical film and the slow axis of the second optical film (2) is preferably 65° $\pm$ 5°. An angle formed between a longer side of the laminated optical film and the slow axis of the third optical film (3) is preferably 90° $\pm$ 5°.

As polarizing plate (P) may be usually used a polarizer with a transparent protective film prepared on one side or both sides of the polarizer. The polarizer is not limited especially but various kinds of polarizer may be used. As a polarizer, for example, a film that is uniaxially stretched after having dichromatic substances, such as iodine and dichromatic dye, absorbed to hydrophilic high molecular weight polymer films, such as polyvinyl alcohol type film, partially formalized polyvinyl alcohol type film, and ethylene-vinyl acetate copolymer type partially saponified film; poly-ene type orientation films, such as dehydrated polyvinyl alcohol and dehydrochlorinated polyvinyl chloride, etc. may be mentioned. In these, a polyvinyl alcohol type film on which dichromatic materials (iodine, dyes) is absorbed and oriented after stretched is suitably used. Although thickness of polarizer is not especially limited, the thickness of about 5 to 80 $\mu$m is commonly adopted.

A polarizer that is uniaxially stretched after a polyvinyl alcohol type film is dyed with iodine is obtained by stretching a polyvinyl alcohol film by 3 to 7 times the original length, after dipped and dyed in aqueous solution of iodine. If needed the film may also be dipped in aqueous solutions, such as boric acid and potassium iodide, which may include zinc sulfate, zinc chloride. Furthermore, before dyeing, the polyvinyl alcohol type film may be dipped in water and rinsed if needed. By rinsing polyvinyl alcohol type film with water, effect of preventing un-uniformity, such as unevenness of dyeing, is expected by making polyvinyl alcohol type film swelled in addition that also soils and blocking inhibitors on the polyvinyl alcohol type film surface may be washed off. Stretching may be applied after dyed with iodine or may be applied concurrently, or conversely dyeing with iodine may be applied after stretching. Stretching is applicable in aqueous solutions, such as boric acid and potassium iodide, and in water bath.

As the transparent protective film prepared on one side or both sides of the polarizer, materials being excellent in transparency, mechanical strength, heat stability, water shielding property, isotropy, etc. may be preferably used. As materials of the above-mentioned protective layer, for example, polyester type polymers, such as polyethylene terephthalate and polyethylenenaphthalate; cellulose type polymers, such as diacetyl cellulose and triacetyl cellulose; acrylics type polymer, such as poly methylmethacrylate; styrene type polymers, such as polystyrene and acrylonitrile-styrene copolymer (AS resin); polycarbonate type polymer may be mentioned. Besides, as examples of the polymer forming a protective film, polyolefin type polymers, such as polyethylene, polypropylene, polyolefin that has cyclo- type or norbornene structure, ethylene-propylene copolymer; vinyl chloride type polymer; amide type polymers, such as nylon and aromatic polyamide; imide type polymers; sulfone type polymers; polyether sulfone type polymers; polyether-ether ketone type polymers; poly phenylene sulfide type polymers; vinyl alcohol type polymer; vinylidene chloride type polymers; vinyl butyral type polymers; arylate type polymers; polyoxymethylene type polymers; epoxy type polymers; or blend polymers of the above-mentioned polymers may be mentioned. Films made of heat curing type or ultraviolet ray curing type resins, such as acryl based, urethane based, acryl urethane based, epoxy based, and silicone based, etc. may be mentioned.

Moreover, as is described in Japanese Patent Laid-Open Publication No. 2001-343529 (WO 01/37007), polymer films, for example, resin compositions including (A) thermoplastic resins having substituted and/or non-substituted imido group in side chain, and (B) thermoplastic resins having substituted and/or non-substituted phenyl and nitrile group in sidechain may be mentioned. As an illustrative example, a film may be mentioned that is made of a resin composition including alternating copolymer comprising iso-butylene and N-methyl maleimide, and acrylonitrile-styrene copolymer. A film comprising mixture extruded article of resin compositions etc. may be used.

In general, a thickness of the protective film, which can be determined arbitrarily, is 10 to 500 $\mu$m less in viewpoint of strength, work handling and thin layer, preferably 20 to 300 $\mu$m, and especially preferably 30 to 300 $\mu$m.

Moreover, it is preferable that the transparent protective film may have as little coloring as possible. Accordingly, a protective film having a retardation value in a film thickness direction represented by Rth= (nx - nz] x d of -90 nm through +75 nm (where, nx represent refractive index in the film plane at slow axis direction, nz represents refractive index in the film thickness direction, and d represents a film thickness) may be preferably used. Thus, coloring (optical coloring) of polarizing plate resulting from a protective film may mostly be cancelled using a protective film having a retardation value (Rth) of -90 nm through +75 nm in the thickness direction. The retardation value (Rth) in the thickness direction is preferably -80 nm through +60 nm, and especially preferably -70 nm through +45 nm.

As a transparent protective film, if polarization property and durability are taken into consideration, cellulose based polymer, such as triacetyl cellulose, is preferable, and especially triacetyl cellulose film is suitable. In addition, when transparent protective films are provided on both sides of the polarizer, transparent protective films comprising same polymer material may be used on both of a front side and a back side, and transparent protective films comprising different polymer materials etc. may be used. Adhesives are used for adhesion processing of the above described polarizer and the transparent protective film. As adhesives, polyvinyl alcohol derived adhesives, gelatin derived adhesives, vinyl polymers derived latex type, aqueous polyurethane based adhesives, aqueous polyesters derived adhesives, etc. may be mentioned.

A hard coat layer may be prepared, or antireflection processing, processing aiming at sticking prevention, diffusion or anti glare may be performed onto the face on which the polarizing film of the above described transparent protective film has not been adhered.

A hard coat processing is applied for the purpose of protecting the surface of the polarizing plate from damage, and this hard coat film may be formed by a method in which, for example, a curable coated film with excellent hardness, slide property etc. is added on the surface of the protective film using suitable ultraviolet curable type resins, such as acrylic type and silicone type resins. Antireflection processing is applied for the purpose of antireflection of outdoor daylight on the surface of a polarizing plate and it may be prepared by forming an antireflection film according to the conventional method etc. Besides, a sticking prevention processing is applied for the purpose of adherence prevention with adjoining layer.

In addition, an anti glare processing is applied in order to prevent a disadvantage that outdoor daylight reflects on the surface of a polarizing plate to disturb visual recognition of transmitting light through the polarizing plate, and the processing may be applied, for example, by giving a fine concavo-convex structure to a surface of the protective film using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 $\mu$m, for example, such as inorganic type fine particles that may have conductivity comprising silica, alumina, titania, zirconia, tin oxides, indium oxides, cadmium oxides, antimony oxides, etc., and organic type fine particles comprising cross-linked of non-cross-linked polymers may be used. When forming fine concavo-convex structure on the surface, the amount of fine particle used is usually about 2 to 50 weight parts to the transparent resin 100 weight parts that forms the fine concavo-convex structure on the surface, and preferably 5 to 25 weight parts. An anti glare layer may serve as a diffusion layer (viewing angle expanding function etc.) for diffusing transmitting light through the polarizing plate and expanding a viewing angle etc.

In addition, the above-mentioned antireflection layer, sticking prevention layer, diffusion layer, anti glare layer, etc. may be built in the protective film itself, and also they may be prepared as an optical layer different from the protective layer.

As pressure sensitive adhesive that forms adhesive layer is not especially limited, and, for example, acrylic type polymers; silicone type polymers; polyesters, polyurethanes, polyamides, polyethers; fluorine type and rubber type polymers may be suitably selected as a base polymer. Especially, a pressure sensitive adhesive such as acrylics type pressure sensitive adhesives may be preferably used, which is excellent in optical transparency, showing adhesion characteristics with moderate wettability, cohesiveness and adhesive property and has outstanding weather resistance, heat resistance, etc.

Proper method may be carried out to attach an adhesive layer to one side or both sides of the optical film. As an example, about 10 to 40 weight % of the pressure sensitive adhesive solution in which a base polymer or its composition is dissolved or dispersed, for example, toluene or ethyl acetate or a mixed solvent of these two solvents is prepared. A method in which this solution is directly applied on a polarizing plate top or an optical film top using suitable developing methods, such as flow method and coating method, or a method in which an adhesive layer is once formed on a separator, as mentioned above, and is then transferred on a polarizing plate or an optical film may be mentioned.

The adhesive layer may contain additives, for example, such as natural or synthetic resins, adhesive resins, glass fibers, glass beads, metal powder, fillers comprising other inorganic powder etc., pigments, colorants and antioxidants. Moreover, it may be an adhesive layer that contains fine particles and shows optical diffusion nature

Thickness of an adhesive layer may be suitably determined depending on a purpose of usage or adhesive strength, etc., and generally is 1 to 500 $\mu$m, preferably 5 to 200 $\mu$m, and more preferably 10 to 100 $\mu$m.

A temporary separator is attached to an exposed side of an adhesive layer to prevent contamination etc., until it is practically used. Thereby, it can be prevented that foreign matter contacts adhesive layer in usual handling. As a separator, without taking the above-mentioned thickness conditions into consideration, for example, suitable conventional sheet materials that is coated, if necessary, with release agents, such as silicone type, long chain alkyl type, fluorine type release agents, and molybdenum sulfide may be used. As a suitable sheet material, plastics films, rubber sheets, papers, cloths, no woven fabrics, nets, foamed sheets and metallic foils or laminated sheets thereof may be used.

In addition, in the present invention, ultraviolet absorbing property may be given to the above-mentioned each layer, such as a polarizer for a polarizing plate, a transparent protective film and an optical film etc. and an adhesive layer, using a method of adding UV absorbents, such as salicylic acid ester type compounds, benzophenol type compounds, benzotriazol type compounds, cyano acrylate type compounds, and nickel complex salt type compounds.

The optical film, the elliptically polarizing plate of the present invention may suitably be used in image displays. Especially, it is suitable for liquid crystal displays in TN mode, OCB and homogeneous mode. For example, it may be preferably used for formation of various apparatus, such as liquid crystal displays of reflective transflective type. Reflective transflective type liquid crystal displays etc. may be suitably used as portable information and telecommunications instruments and personal computers. When forming a reflected type transflective type liquid crystal display, an elliptically polarizing plate of this invention is arranged on a backlight of a liquid crystal cell.

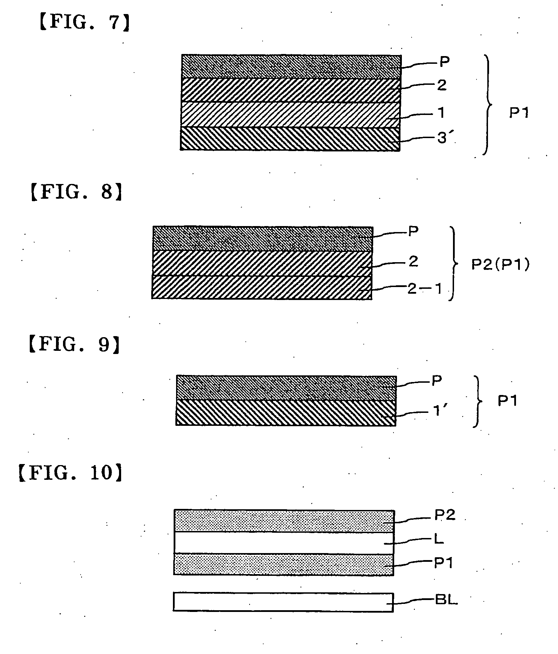

In Fig. 10, an elliptically polarizing plate (P1) of the present invention shown in Figs. 4 or 6 is arranged via a pressure sensitive adhesive layer, on a side of a backlight (BL) of a liquid crystal cell (L) in a reflective transflective type liquid crystal display. Although an arranged side of an elliptically polarizing plate (P1) being laminated on a lower side (backlight side) of liquid crystal cell (L) is not especially limited, it is preferably arranged so that a polarizing plate (P) of the elliptically polarizing plate (P1) may be most separated from the liquid crystal cell (L) side. Liquid crystal is enclosed within a liquid crystal cell (L). A transparent electrode is provided on an upper liquid crystal cell substrate, and a reflecting layer serving also as an electrode is provided on a lower liquid crystal cell substrate. An elliptically polarizing plate (P2) and various optical films that are used for reflective transflective type liquid crystal displays are arranged on an upper side of liquid crystal cell substrate. The elliptically polarizing plate (P2) may also preferably arrange so that the polarizing plate (P) may be most separated from the liquid crystal cell (L) side.

Besides, when the laminated optical film and the elliptically polarizing plate of the present invention are mounted in a liquid crystal display etc., in the third optical film (3), the average optical axis (an average angle of tilted alignment) of a material showing optically negative uniaxial property is preferably arranged so it may face an almost same direction as a direction of alignment of a liquid crystal molecule in a thick direction middle (mid-plane) of a liquid crystal cell, which is aligned by voltage applied from upper side and lower side. In aforesaid case, an alignment of the liquid cell may be twisted type or non-twisted type.

The reflective transflective type liquid crystal display of the Fig. 10 is shown as an example of liquid crystal cells, and, in addition to the example, a laminated optical film and an elliptically polarizing plate of the present invention may be used in various kinds of liquid crystal displays.

In addition, a transflective type polarizing plate may be obtained by preparing the above-mentioned reflective layer as a transflective type reflective layer, such as a half-mirror etc. that reflects and transmits light. A transflective type polarizing plate is usually prepared in the backside of a liquid crystal cell and it may form a liquid crystal display unit of a type in which a picture is displayed by an incident light reflected from a view side (display side) when used in a comparatively well-lighted atmosphere. And this unit displays a picture, in a comparatively dark atmosphere, using embedded type light sources, such as a back light built in backside of a transflective type polarizing plate. That is, the transflective type polarizing plate is useful to obtain of a liquid crystal display of the type that saves energy of light sources, such as a back light, in a well-lighted atmosphere, and can be used with a built-in light source if needed in a comparatively dark atmosphere etc.

An optical film and an elliptically polarizing plate of the present invention are applied to various kind of liquid crystal displays. The optical film and the elliptically polarizing plate can be laminated with other optical layers. There is especially no limitation about the optical layers, which may be used for formation of a liquid crystal display etc., such as a reflector, a transflective plate, a retardation plate (a half wavelength plate and a quarter wavelength plate included). The optical layers may be one layer or two or more layer. Especially preferable polarizing plates are; a reflection type polarizing plate or a transflective type polarizing plate in which a reflector or a transflective reflector is further laminated onto a polarizing plate; or a polarizing plate in which a brightness enhancement film is further laminated onto the polarizing plate.

A reflective layer is prepared on a polarizing plate to give a reflection type polarizing plate, and this type of plate is used for a liquid crystal display in which an incident light from a view side (display side) is reflected to give a display. This type of plate does not require built-in light sources, such as a backlight, but has an advantage that a liquid crystal display may easily be made thinner. A reflection type polarizing plate may be formed using suitable methods, such as a method in which a reflective layer of metal etc. is, if required, attached to one side of a polarizing plate through a transparent protective layer etc.

As an example of a reflection type polarizing plate, a plate may be mentioned on which, if required, a reflective layer is formed using a method of attaching a foil and vapor deposition film of reflective metals, such as aluminum, to one side of a matte treated protective film. Moreover, a different type of plate with a fine concavo-convex structure on the surface obtained by mixing fine particle into the above-mentioned protective film, on which a reflective layer of concavo-convex structure is prepared, may be mentioned. The reflective layer that has the above-mentioned fine concavo-convex structure diffuses incident light by random reflection to prevent directivity and glaring appearance, and has an advantage of controlling unevenness of light and darkness etc. Moreover, the protective film containing the fine particles has an advantage that unevenness of light and darkness may be controlled more effectively, as a result that an incident light and its reflected light that is transmitted through the film are diffused. A reflective layer with fine concavo-convex structure on the surface effected by a surface fine concavo-convex structure of a protective film may be formed by a method of attaching a metal to the surface of a transparent protective layer directly using, for example, suitable methods of a vacuum evaporation method, such as a vacuum deposition method, an ion plating method, and a sputtering method, and a plating method etc.

Instead of a method in which a reflection plate is directly given to the protective film of the above-mentioned polarizing plate, a reflection plate may also be used as a reflective sheet constituted by preparing a reflective layer on the suitable film for the transparent film. In addition, since a reflective layer is usually made of metal, it is desirable that the reflective side is covered with a protective film or a polarizing plate etc. when used, from a viewpoint of preventing deterioration in reflectance by oxidation, of maintaining an initial reflectance for a long period of time and of avoiding preparation of a protective layer separately etc.

The polarizing plate with which a polarizing plate and a brightness enhancement film are adhered together is usually used being prepared in a backside of a liquid crystal cell. A brightness enhancement film shows a characteristic that reflects linearly polarized light with a predetermined polarization axis, or circularly polarized light with a predetermined direction, and that transmits other light, when natural light by back lights of a liquid crystal display or by reflection from a back-side etc., comes in. The polarizing plate, which is obtained by laminating a brightness enhancement film to a polarizing plate, thus does not transmit light without the predetermined polarization state and reflects it, while obtaining transmitted light with the predetermined polarization state by accepting a light from light sources, such as a backlight. This polarizing plate makes the light reflected by the brightness enhancement film further reversed through the reflective layer prepared in the backside and forces the light re-enter into the brightness enhancement film, and increases the quantity of the transmitted light through the brightness enhancement film by transmitting a part or all of the light as light with the predetermined polarization state. The polarizing plate simultaneously supplies polarized light that is difficult to be absorbed in a polarizer, and increases the quantity of the light usable for a liquid crystal picture display etc., and as a result luminosity may be improved. That is, in the case where the light enters through a polarizer from backside of a liquid crystal cell by the back light etc. without using a brightness enhancement film, most of the light, with a polarization direction different from the polarization axis of a polarizer, is absorbed by the polarizer, and does not transmit through the polarizer. This means that although influenced with the characteristics of the polarizer used, about 50 percent of light is absorbed by the polarizer, the quantity of the light usable for a liquid crystal picture display etc. decreases so much, and a resulting picture displayed becomes dark. A brightness enhancement film does not enter the light with the polarizing direction absorbed by the polarizer into the polarizer but reflects the light once by the brightness enhancement film, and further makes the light reversed through the reflective layer etc. prepared in the backside to re-enter the light into the brightness enhancement film. By this above-mentioned repeated operation, only when the polarization direction of the light reflected and reversed between the both becomes to have the polarization direction which may pass a polarizer, the brightness enhancement film transmits the light to supply it to the polarizer. As a result, the light from a backlight may be efficiently used for the display of the picture of a liquid crystal display to obtain a bright screen.

A diffusion plate may also be prepared between brightness enhancement film and the above described reflective layer, etc. A polarized light reflected by the brightness enhancement film goes to the above described reflective layer etc., and the diffusion plate installed diffuses passing light uniformly and changes the light state into depolarization at the same time. That is, the diffusion plate returns polarized light to natural light state. Steps are repeated where light, in the unpolarized state, i.e., natural light state, reflects through reflective layer and the like, and again goes into brightness enhancement film through diffusion plate toward reflective layer and the like. Diffusion plate that returns polarized light to the natural light state is installed between brightness enhancement film and the above described reflective layer, and the like, in this way, and thus a uniform and bright screen may be provided while maintaining brightness of display screen, and simultaneously controlling non-uniformity of brightness of the display screen. By preparing such diffusion plate, it is considered that number of repetition times of reflection of a first incident light increases with sufficient degree to provide uniform and bright display screen conjointly with diffusion function of the diffusion plate.

The suitable films are used as the above-mentioned brightness enhancement film. Namely, multilayer thin film of a dielectric substance; a laminated film that has the characteristics of transmitting a linearly polarized light with a predetermined polarizing axis, and of reflecting other light, such as the multilayer laminated film of the thin film having a different refractive-index anisotropy D-BEF and others manufactured by 3M Co., Ltd.); an aligned film of cholesteric liquid-crystal polymer; a film that has the characteristics of reflecting a circularly polarized light with either left-handed or right-handed rotation and transmitting other light, such as a film on which the aligned cholesteric liquid crystal layer is supported(PCF350 manufactured by Nitto Denko CORPORATION, Transmax manufactured by Merck Co., Ltd., and others); etc. may be mentioned.

Therefore, in the brightness enhancement film of a type that transmits a linearly polarized light having the above-mentioned predetermined polarization axis, by arranging the polarization axis of the transmitted light and entering the light into a polarizing plate as it is, the absorption loss by the polarizing plate is controlled and the polarized light can be transmitted efficiently. On the other hand, in the brightness enhancement film of a type that transmits a circularly polarized light as a cholesteric liquid-crystal layer, the light may be entered into a polarizer as it is, but it is desirable to enter the light into a polarizer after changing the circularly polarized light to a linearly polarized light through a retardation plate, taking control an absorption loss into consideration. In addition, a circularly polarized light is convertible into a linearly polarized light using a quarter wavelength plate as the retardation plate.

A retardation plate that works as a quarter wavelength plate in a wide wavelength ranges, such as a visible-light band, is obtained by a method in which a retardation layer working as a quarter wavelength plate to a pale color light with a wavelength of 550 nm is laminated with a retardation layer having other retardation characteristics, such as a retardation layer working as a half-wavelength plate. Therefore, the retardation plate located between a polarizing plate and a brightness enhancement film may consist of one or more retardation layers.

In addition, also in a cholesteric liquid-crystal layer, a layer reflecting a circularly polarized light in a wide wavelength ranges, such as a visible-light band, may be obtained by adopting a configuration structure in which two or more layers with different reflective wavelength are laminated together. Thus a transmitted circularly polarized light in a wide wavelength range may be obtained using this type of cholesteric liquid-crystal layer.

Moreover, the polarizing plate may consist of multi-layered film of laminated layers of a polarizing plate and two of more of optical layers as the above-mentioned separated type polarizing plate. Therefore, a polarizing plate may be a reflection type elliptically polarizing plate or a transflective type elliptically polarizing plate, etc. in which the above-mentioned reflection type polarizing plate or a transflective type polarizing plate is combined with above described retardation plate respectively.

Assembling of a liquid crystal display may be carried out according to conventional methods. That is, a liquid crystal display is generally manufactured by suitably assembling several parts such as a liquid crystal cell, optical films and, if necessity, lighting system, and by incorporating driving circuit. In the present invention, except that an elliptically polarizing plate by the present invention is used, there is especially no limitation to use any conventional methods. Also any liquid crystal cell of arbitrary type, such as TN type, and STN type, π type may be used.

Suitable liquid crystal displays, such as liquid crystal display with which the above-mentioned elliptically polarizing plate has been located at one side or both sides of the liquid crystal cell, and with which a backlight or a reflector is used for a lighting system may be manufactured. In this case, the optical film by the present invention may be installed in one side or both sides of the liquid crystal cell. When installing the optical films in both sides, they may be of the same type or of different type. Furthermore, in assembling a liquid crystal display, suitable parts, such as diffusion plate, anti-glare layer, antireflection film, protective plate, prism array, lens array sheet, optical diffusion plate, and backlight, may be installed in suitable position in one layer or two or more layers.

Subsequently, organic electro luminescence equipment (organic EL display) will be explained. Generally, in organic EL display, a transparent electrode, an organic emitting layer and a metal electrode are laminated on a transparent substrate in an order configuring an illuminant (organic electro luminescence illuminant). Here, an organic emitting layer is a laminated material of various organic thin films, and much compositions with various combination are known, for example, a laminated material of hole injection layer comprising triphenylamine derivatives etc., a luminescence layer comprising fluorescent organic solids, such as anthracene; a laminated material of electronic injection layer comprising such a luminescence layer and perylene derivatives, etc.; laminated material of these hole injection layers, luminescence layer, and electronic injection layer etc.

An organic EL display emits light based on a principle that positive hole and electron are injected into an organic emitting layer by impressing voltage between a transparent electrode and a metal electrode, the energy produced by recombination of these positive holes and electrons excites fluorescent substance, and subsequently light is emitted when excited fluorescent substance returns to ground state. A mechanism called recombination which takes place in a intermediate process is the same as a mechanism in common diodes, and, as is expected, there is a strong non-linear relationship between electric current and luminescence strength accompanied by rectification nature to applied voltage.

In an organic EL display, in order to take out luminescence in an organic emitting layer, at least one electrode must be transparent. The transparent electrode usually formed with transparent electric conductor, such as indium tin oxide (ITO), is used as an anode. On the other hand, in order to make electronic injection easier and to increase luminescence efficiency, it is important that a substance with small work function is used for cathode, and metal electrodes, such as Mg-Ag and Al-Li, are usually used.

In organic EL display of such a configuration, an organic emitting layer is formed by a very thin film about 10nm in thickness. For this reason, light is transmitted nearly completely through organic emitting layer as through transparent electrode. Consequently, since the light that enters, when light is not emitted, as incident light from a surface of a transparent substrate and is transmitted through a transparent electrode and an organic emitting layer and then is reflected by a metal electrode, appears in front surface side of the transparent substrate again, a display side of the organic EL display looks like mirror if viewed from outside.

In an organic EL display containing an organic electro luminescence illuminant equipped with a transparent electrode on a surface side of an organic emitting layer that emits light by impression of voltage, and at the same time equipped with a metal electrode on a back side of organic emitting layer, a retardation plate may be installed between these transparent electrodes and a polarizing plate, while preparing the polarizing plate on the surface side of the transparent electrode.

Since the retardation plate and the polarizing plate have function polarizing the light that has entered as incident light from outside and has been reflected by the metal electrode, they have an effect of making the mirror surface of metal electrode not visible from outside by the polarization action. If a retardation plate is configured with a quarter wavelength plate and the angle between the two polarization directions of the polarizing plate and the retardation plate is adjusted to $\pi/4$, the mirror surface of the metal electrode may be completely covered.

This means that only linearly polarized light component of the external light that enters as incident light into this organic EL display is transmitted with the work of polarizing plate. This linearly polarized light generally gives an elliptically polarized light by the retardation plate, and especially the retardation plate is a quarter wavelength plate, and moreover when the angle between the two polarization directions of the polarizing plate and the retardation plate is adjusted to $\pi/4$, it gives a circularly polarized light.

This circularly polarized light is transmitted through the transparent substrate, the transparent electrode and the organic thin film, and is reflected by the metal electrode, and then is transmitted through the organic thin film, the transparent electrode and the transparent substrate again, and is turned into a linearly polarized light again with the retardation plate. And since this linearly polarized light lies at right angles to the polarization direction of the polarizing plate, it cannot be transmitted through the polarizing plate. As the result, mirror surface of the metal electrode may be completely covered.

Hereinafter, detailed descriptions for embodiments of the present invention will be given with reference to Examples and Comparative Examples, but these Examples and Comparative Examples do not limit the present invention. The characteristics of optical films (after stretched) etc. of each Example were measured by following methods.

**<Absolute value of photoelastic coefficient>**

Using Ellipsomter manufactured by Jasco Corporation (M220), a stress refractive index was measured when a stress of $1 \times 10^{-6}$ to $30 \times 10^{-6}$ was applied to an optical film with a width of 2 cm at room temperature (23°C). The obtained measured values were plotted and the absolute value of photoelastic coefficient c: (m²/N) was calculated from stress birefringence $\triangle n=c\delta$. Where, $\delta$ represents stress (N/m²).

<Measurement of refractive index: Nz coefficient and retardation>

In measurement of refractive index of optical films, each of main refractive indices nx, ny, and nz in a film plane direction and in the thickness direction, respectively, were measured as a value for $\lambda = 590$ nm using an automatic birefringence measuring equipment (manufactured by Oji Scientific Instruments, automatic birefringence meter). Nz = (nx - nz) / (nx - ny) was calculated from obtained refractive index values. Moreover, the front retardation (Re) = (nx - ny) $\times$ d, and a retardation in the thickness direction = (nx -nz) $\times$ d were calculated from refractive index values and an optical film thickness (d: nm).

<Glass transition temperature: Tg>

It was measured with a heating rate of 10°C /minute under nitrogen gas current of 20 ml / minute using a DSC 5500 manufactured by SEIKO Instruments Inc.

<Weight average molecular weight>

The weight average molecular weight of a tetrahydrofuran soluble portion was calculated with HLC-8120 GPC system manufactured by TOSOH CORPORATION using a gel permeation chromatography (GPC) method (by polystyrene standard).

<Tilt angle>

In the third optical film (3), an tilt angle that was made by the average optical axis of the optical material having tilted alignment and the normal axis of the third optical film (3) were inclined -50° to 50° right and left centering on slow axis in the third optical film (3), and thus a retardation was measured with the measuring apparatus. An absolute value of an angle showing a minimum retardation was adopted. Besides, in measurement, a measured angle was set as 0°, when the normal axis to a film plane is in agreement with a direction of incidence of a light from a light source of a measuring instrument.

Example 1

(Optical film (1) having a controlled three dimensional refractive index)

As a polymer film including a polycarbonate resin and a styrene resin, ELMECH film (thickness of 55 $\mu$m): a product name, manufactured by Kaneka Corp. was used. The polycarbonate resin includes a polymer originated in 2,2-bis(4-hydroxy phenyl)propane, and 1,1-bis (4-hydroxy phenyl)-3,3,5-trimethyl cyclohexane with a blending ratio of 40 : 60(by weight ratio). Moreover, a content ratio of styrene resin (weight average molecular weight 10,000) in the polymer film was 27% by weight.

Heat-shrinkable films, which are a biaxially stretched polyester film, were adhered on both sides of the polymer film (ELMECH film) through pressure sensitive adhesive layers. Then, the obtained film was held with a simultaneous biaxial stretching machine, and stretched 1.3 times at 145°C. The obtained stretched film(the first optical film(1)) was transparent, and had a thickness of 60 $\mu$m, the front retardation of 140 nm, , a retardation in the thickness direction of 70 nm, and an Nz coefficient of 0.5. Moreover, the absolute value of photoelastic coefficient was $5.0 \times 10^{-11}$, and Tg 140°C.

(Optical film (2) showing optically positive uniaxial property)

A norbornene based film with a thickness of 100 $\mu$m (manufactured by JSR, Inc., product name Arton film) was uniaxially stretched 1.5 times at 170°C. The obtained stretched film(the first optical film(2)) had a thickness of 75 $\mu$m, the front retardation of 270 nm, a retardation in the thickness direction of 270 nm, and an Nz coefficient of 1.0.

It is established that an Nz coefficient is 1.0 in a case where a relation of $nx_2 > ny_2 \cong nz_2$ is given, where the direction along with the refractive index in the film plane is maximum is defined as the X-axis, a direction perpendicular to the X-axis as the Y-axis, the thickness direction of the film as the Z-axis, and where refractive indices in each axial direction are defined as $nx_2$, $ny_2$, and $nz_2$, respectively. The absolute value of photoelastic coefficient was $10.0 \times 10^{-11}$ and a Tg 170°C.

(Optical film (3) formed of a material showing optically negative uniaxial property is tilted)

A film WVSA 128 manufactured by Fuji Photo Film, Co., Ltd. (thickness: 80 $\mu$m) was used. The film is produced by applying a discotic liquid crystal onto a supporting medium, and has the front retardation of 33 nm, a retardation in the thickness direction of 160 nm, and a tilt angle of the average optical axis being tilting aligned of 20°.

(Laminated optical film and elliptically polarizing plate)

The first optical film (1), the second optical film (2), and the third optical film (3) were laminated through pressure sensitive adhesive layers (30 $\mu$m in thickness, acrylic based pressure sensitive adhesive), and a laminated optical film as shown in Fig.1 was obtained. Subsequently, a polarizing plate (P) (manufactured by NITTO DENKO Co., Ltd., TEG1465DU) was laminated on the second optical film (2) side of the laminated optical film through a pressure sensitive adhesive layer (30 $\mu$m in thickness, acrylic based pressure sensitive adhesive), and an elliptically polarizing plate as shown in Fig.4 was obtained. A size of an elliptically polarizing plate was set to 120 mm $\times$ 160 mm. In a case where a longer side of the elliptically polarizing plate was set to 0°, the slow axis of the first optical film (1) was set so as to form an angle of 0° counterclockwise and the slow axis of the second optical film (2) was set so as to form an angle of 65° and the absorption axis of the polarizing plate was set to form an angle of 175°. The slow axis of the third optical film (3) was set to form an angle of 90°

Example 2

The first optical film (1), the second optical film (2), the third optical film (3), and a polarizing plate (P) used in Example 1 were laminated through pressure sensitive adhesive layers (30 $\mu$m in thickness, acrylic based pressure sensitive adhesive) in an order of the first optical film (1) /the third optical film (3) / the second optical film (2) / the polarizing plate (P) as shown in Fig.5, and an elliptically polarizing plate was obtained. A size of the elliptically polarizing plate and lamination angles of the optical films (1) to (3) and the polarizing plate (P) were set so as to be the same as in Example 1.

Example 3

The first optical film (1), the second optical film (2), the third optical film (3), and the polarizing plate (P) used in Example 1 were laminated through pressure sensitive adhesive layers (30 $\mu$m in thickness, acrylic based pressure sensitive adhesive) in an order of the first optical film (1) /the second optical film (2) / the third optical film (3) / the polarizing plate (P) as shown in Fig.6, and an elliptically polarizing plate was obtained. A size of the elliptically polarizing plate and lamination angles of the optical films (1) to (3) and the polarizing plate (P) were set so as to be the same as in Example 1.

Comparative Example 1

(Optical film (3') formed of a material showing optically negative uniaxial property is tilted)

A film WVSA 12B manufactured by Fuji Photo Film, Co., Ltd. (thickness: 110 $\mu$m) was used. The film is produced by applying a discotic liquid crystal onto a supporting medium, and has the front retardation of 30 nm, a retardation in the thickness direction of 160 nm, and a tilt angle of the average optical axis being tilting aligned of 20°.

(Laminated Optical film and Elliptically Polarizing Plate)

A laminated optical film was obtained in a similar way to that in Example 1 except that in Example 1, the optical film (3') was used instead of the third optical film (3). Then, a polarizing plate (P: with a trade name of TEG1465DU manufactured by Nitto Denko Corporation) was laminated on the second optical film (2) side of the laminated optical film with a pressure sensitive adhesive layer (of an acrylic-based pressure sensitive adhesive with a thickness of 30 $\mu$m) interposed therebetween to obtain the elliptically polarizing plate as shown in Fig. 7. A size of the elliptically polarizing plate, lamination angles of the optical films (1) to (3) and the polarizing plate (P) were set to the same as in Example 1.

Comparative Example 2

(Optical film (2-1) showing optically positive uniaxial property)

A norbornene-based film with a thickness of 100 $\mu$m (with a trade name of Arton film manufactured by JSR Corporation) was uniaxially stretched to a stretch ratio of 1.3. The obtained stretched film had a thickness of 80 $\mu$m, the front retardation of 140 nm, a retardation in the thickness direction of 140 nm and an Nz coefficient of 1. This film was used as the optical film (2-1). The absolute value of photoelastic coefficient was $1.0 \times 10^{-11}$, and Tg was 170°C.

(Elliptical Polarizing Plate)

The optical film (2-1), the second optical film (2) and polarizing plate (P) used in Example 1 were laminated in the order of the second optical film (2)/the optical film (2-1)/the polarizing plate (P) as shown in Fig. 8 with a pressure sensitive adhesive layer (a acrylic-based pressure sensitive adhesive with a thickness of 30 $\mu$m) interposed therebetween to obtain an elliptically polarizing plate. A size of the elliptically polarizing plate was set so as to be similar to that in Example 1. The elliptically polarizing plate, in a case where a longer side is set to 0°, set the slow axis of the optical film (2-1) so as to form an angle of 0°, the slow axis of the second optical film (2) so as to form an angle of 65° and the absorption axis of the polarizing plate so as to form a angle of 175°, counterclockwise.

Comparative Example 2

(Polymer film)

As a polymer film consisting of a polycarbonate resin, R film: product name by Kaneka Corp. (70 $\mu$m in thickness) was used.

(Optical film (1'))

Heat-shrinkable films, which are a biaxially stretched polyester film, were adhered on both sides of the polymer film (R film) through pressure sensitive adhesive layers. Then, the obtained film was held with a simultaneous biaxial stretching machine, and stretched 1.1 times at 160°C. The obtained stretched film was transparent and had a thickness of 80 $\mu$m, the front retardation of 140 nm, a retardation in the thickness direction of 70 nm, and an Nz coefficient of 0.5. In addition, the absolute value of photoelastic coefficient was $12.0 \times 10^{-11}$ and a Tg 155°C.

(Elliptically polarizing plate)

The optical film (1') and the polarizing plate (P) were laminated through a pressure sensitive adhesive layer (30 $\mu$m in thickness as shown in Fig.9, acrylic based pressure sensitive adhesive) in an order of the optical film (1') / the polarizing plate (P), and an elliptically polarizing plate was obtained.

(Evaluation)

The elliptically polarizing plate produced in Examples and Comparative Examples were mounted as an elliptically polarizing plate (P1) on a backlight side of a reflective transflective type TFT-TN type liquid crystal display of Fig.10. On the other hand, the elliptically polarizing plate produced in Comparative Example 1 was mounted as an elliptically polarizing plate (P2) on a viewing side. Each of the elliptically polarizing plate (P1) and the elliptically polarizing plate (P2) was mounted so that a polarizing plate side might be in a lamination position most distant from the liquid crystal cell (L) side. Following evaluation was performed about the liquid crystal display. Table 1 shows the results.

<Viewing angle>

A white image and black image were displayed on the liquid crystal display, and a Y-value, an x-value, and a y-value in XYZ colorimetric system at viewing angles of 0 to 70° in front and in four (upward, downward, right-hand and left-hand) directions were measured using EZcontrast 160D manufactured by ELDIM.
An angle when a value of a contrast at that time (Y-value (white image)) / (Y-value (black image)) was a value of 10 or more was defined as a viewing angle.
Moreover, in a white image, an amount of chromaticity variation of a chromaticity ($x_{40}$, $y_{40}$) in a state tilted 40° in four (upward, downward, right-hand and left-hand) directions, respectively, to a chromaticity ($x_0$, $y_0$) in a front of a screen was compared. The amount of chromaticity variation was calculated by a following equation. Table 1 shows the results. Amount of chromaticity variation = $\sqrt{(x_{40}-x_0)^2+(y_{40}-y_0)^2}$.

<Durability>

The liquid crystal display was introduced in following conditions.

Condition (1): 85°C $\times$ 480 hours
Condition (2): 60°C, 90% RH $\times$ 480 hours

Condition (3): a heat shock of -30 to 85°C, 30 minutes each $\times$ 200 times

In-plane unevenness with time of a display image in each of the conditions was evaluated according to following criteria based on variations of contrast.

**Value of variation of contrast = absolute value of [{(value with time - initial value) / initial value} × 100(%)]**

OO: Variation of contrasts $\leq$ 10%

O: Variation of contrast > 10% and < 20%

$\times$: Variation of contrasts $\geq$ 20%

Table 1

| | | | Example 1 | | Example 2 | | Example 3 | | Comparative Example 1 | | Comparative Example 2 | | Comparative Example 3 | |
|---|---|---|---|---|---|---|---|---|---|---|---|---|---|---|
| | | | Viewing angle (°) | Amount of chromaticity variation (-) | Viewing angle (°) | Amount of chromaticity variation (-) | Viewing angle (°) | Amount of chromaticity variation (-) | Viewing angle (°) | Amount of chromaticity variation (-) | Viewing angle (°) | Amount of chromaticity variation (-) | Viewing angle (°) | Amount of chromaticity variation (-) |
| Viewing angle (Viewed in inclined direction) | | Upward | 28 | 0.28 | 21 | 0.29 | 20 | 0.29 | 28 | 0.28 | 13 | 0.35 | 20 | 0.30 |
| | | Downward | 30 | 0.26 | 23 | 0.29 | 22 | 0.29 | 30 | 0.26 | 15 | 0.33 | 22 | 0.29 |
| | | Left-hand | 27 | 0.28 | 21 | 0.29 | 20 | 0.30 | 27 | 0.28 | 14 | 0.30 | 20 | 0.30 |
| | | Right-hand | 27 | 0.28 | 20 | 0.29 | 21 | 0.29 | 27 | 0.28 | 14 | 0.30 | 20 | 0.30 |
| Durability | Condition (1) | Initial | OO | | OO | | OO | | O | | O | | O | |
| | | 120 hours | OO | | OO | | OO | | O | | O | | O | |
| | | 240 hours | OO | | OO | | OO | | O | | O | | x | |
| | | 480 hours | OO | | OO | | OO | | O | | O | | x | |
| | Condition (2) | Initial | OO | | OO | | OO | | O | | O | | O | |
| | | 120 hours | O | | O | | O | | O | | O | | O | |
| | | 240 hours | O | | O | | O | | O | | O | | O | |
| | | 480 hours | O | | O | | O | | O | | O | | x | |
| | Condition (3) | Initial | OO | | OO | | OO | | O | | O | | O | |
| | | 50 hours | OO | | OO | | OO | | O | | O | | O | |
| | | 100 hours | OO | | OO | | OO | | O | | O | | O | |
| | | 200 hours | O | | O | | O | | O | | O | | x | |

**Claims**

1. A laminated optical film comprising:

   a first optical film(1) obtained by stretching a polymer film comprising a polycarbonate resin and a styrene resin, wherein the absolute value of photoelastic coefficient is $2.0 \times 10^{-11}$ to $6.0 \times 10^{-11} \mathrm{m}^2/\mathrm{N}$, and the three dimensional refractive index is controlled so that an Nz coefficient expressed by $Nz = (nx_1 - nz_1) / (nx_1 - ny_1)$ satisfies $Nz \leq 0.9$, and the front retardation $(Re) = (nx_1 - ny_1) \times d_1$ satisfies $Re \geq 80$ nm, where the direction along with the refractive index in the film plane is maximum is defined as the X-axis, a direction perpendicular to the X-axis as the Y-axis, the thickness direction of the film as the Z-axis, and where refractive indices in each axial direction are defined as $nx_1$, $ny_1$, and $nz_1$, respectively, and the thickness of the film as $d_1$ (nm);
   a second optical film (2) showing optically positive uniaxial property that satisfies $nx_2 > ny_2 \cong nz_2$, where the direction along with the refractive index in the film plane is maximum is defined as the X-axis, a direction perpendicular to the X-axis as the Y-axis, the thickness direction of the film as the Z-axis, and where refractive indices in each axial direction are defined as $nx_2$, $ny_2$, and $nz_2$, respectively; and
   a third optical film (3) formed of a material showing optically negative uniaxial property, and the material comprising a part being angularly aligned and the thickness of the film is 30 to 90$\mu$m,

   wherein the shape of the laminated optical film is rectangular,

   the angle formed between the longer side of the laminated optical film and the absorption axis of the polarizing plate is $175° \pm 5°$,
   the angle formed between the longer side of the laminated optical film and the slow axis of the first optical film (1) is $0° \pm 5°$,
   the angle formed between the longer side of the laminated optical film and the slow axis of the second optical film (2) is $65° 5°$,
   the angle formed between a longer side of the laminated optical film and the slow axis of the third optical film (3) is preferably $90° \pm 5°$,

   where the angles are formed counterclockwise with the longer side of the laminated optical film defined at 0°.

2. The laminated optical film according to Claim 1,
   wherein the weight average molecular weight of styrene resin of the first optical film (1) is 20,000 or less.

3. The laminated optical film according to Claim 1 or 2,
   wherein the glass transition temperature of the first optical film (1) is in a range of 110 to 180°C.

4. The laminated optical film according to any of Claim 1 to 3, wherein the second optical film (2) is obtained by stretching a polymer film comprising a norbornene polymer.

5. The laminated optical film according to any of Claim 1 to 3, wherein the second optical film (2) is obtained by stretching a polymer film comprising a polycarbonate resin and a styrene resin, said second optical film having the absolute value of photoelastic coefficient of $0.5 \times 10^{-11}$ to $6.0 \times 10^{-11}$ m$^2$/N.

6. The laminated optical film according to any of Claim 1 to 5, wherein the material showing optically negative uniaxial property forming the third optical film (3) is a discotic liquid crystal compound.

7. The laminated optical film according to any of Claim 1 to 6, wherein the material showing optically negative uniaxial property forming the third optical film (3) is tilted so that the average optical axis and the normal axis of said third optical film (3) make a tilt angle in a range of 5 to 50°.

8. The laminated optical film according to any of Claim 1 to 7, wherein the first optical film (1) having a controlled three dimensional refractive index is disposed between the second optical film (2) showing optically positive uniaxial property, and the third optical film (3) formed of a material showing optically negative uniaxial property is tilted.

9. An elliptically polarizing plate comprising: a laminated optical film according to any of Claim 1 to 8 and a polarizing plate.

**10.** The elliptically polarizing plate according to Claim 9, wherein the polarizing plate is laminated on the side of the second optical film (2) of the laminated optical film according to Claim 8.

**11.** An image viewing display comprising, the laminated optical film according to any of Claim 1 to 8, or the elliptically polarizing plate according to Claim 9 or 10.

**Patentansprüche**

**1.** Laminierte optische Folie, umfassend:

eine erste optische Folie (1), erhalten durch Verstrecken einer Polymerfolie, welche ein Polycarbonatharz und ein Styrolharz umfaßt,
wobei der absolute Wert des photoelastischen Koeffizienten $2,0 \times 10^{-11}$ bis $6,0 \times 10^{-11}$ m2/N beträgt, und der dreidimensionale Brechungsindex derart kontrolliert ist, daß ein Nz-Koeffizient, ausgedrückt durch Nz = ($nx_1 - nz_1$) / ($nx_1 - ny_1$), Nz $\leq 0,9$ genügt, und der Vordergangunterschied (Re) = ($nx_1 - ny_1$) x $d_1$ Re $\geq 80$ nm genügt, wobei die Richtung, entlang welcher der Brechungsindex in der Folienebene maximal ist, als die X-Achse, eine Richtung orthogonal zu der X-Achse als die Y-Achse, die Dickerichtung der Folie als die Z-Achse definiert sind, und wobei die Brechungsindices in jeder Axialrichtung als $nx_1$, $ny_1$ bzw. $nz_1$, und die Dicke der Folie als $d_1$ (nm) definiert sind,
eine zweite optische Folie (2), welche eine optisch positive, uniaxiale Eigenschaft zeigt, die $nx_2 > ny_2 \cong nz_2$ genügt, wobei die Richtung, entlang welcher der Brechungsindex in der Folienebene maximal ist, als die X-Achse, eine Richtung orthogonal zu der X-Achse als die Y-Achse, die Dickerichtung der Folie als die Z-Achse definiert sind, und wobei die Brechungsindices in jeder Axialrichtung als $nx_2$, $ny_2$ bzw. $nz_2$ definiert sind, und
eine dritte optische Folie (3), gebildet aus einem Material, welches eine optisch negative, uniaxiale Eigenschaft zeigt, und wobei das Material einen Teil umfaßt, welcher winklig ausgerichtet ist, und die Dicke der Folie 30 bis 90 µm beträgt,

wobei die Form der laminierten optischen Folie rechteckig ist,

der Winkel, welcher zwischen der längeren Seite der laminierten optischen Folie und der Absorptionsachse der polarisierenden Platte gebildet ist, 175° $\pm$ 5° beträgt,
der Winkel, welcher zwischen der längeren Seite der laminierten optischen Folie und der lateralen Achse bzw. slow axis der ersten optischen Folie (1) gebildet ist, 0° $\pm$ 5° beträgt,
der Winkel, welcher zwischen der längeren Seite der laminierten optischen Folie und der lateralen Achse der zweiten optischen Folie (2) gebildet ist, 65° $\pm$ 5° beträgt,
der Winkel, welcher zwischen einer längeren Seite der laminierten optischen Folie und der lateralen Achse der dritten optischen Folie (3) gebildet ist, vorzugsweise 90° $\pm$ 5° beträgt,

wobei die Winkel entgegen dem Uhrzeigersinn gebildet sind, wobei die längere Seite der laminierten optischen Folie bei 0° definiert ist.

**2.** Laminierte optische Folie nach Anspruch 1, wobei das gewichtsgemittelte Molekulargewicht des Styrolharzes der ersten optischen Folie (1) 20.000 oder weniger beträgt.

**3.** Laminierte optische Folie nach Anspruch 1 oder 2, wobei die Glasübergangstemperatur der ersten optischen Folie (1) in einem Bereich von 110 bis 180°C ist.

**4.** Laminierte optische Folie nach einem der Ansprüche 1 bis 3, wobei die zweite optische Folie (2) durch Verstrecken einer Polymerfolie, umfassend ein Norbornenpolymer, erhalten ist.

**5.** Laminierte optische Folie nach einem der Ansprüche 1 bis 3, wobei die zweite optische Folie (2) durch Verstrecken einer Polymerfolie, umfassend ein Polycarbonatharz und ein Styrolharz, erhalten ist, wobei die zweite optische Folie den absoluten Wert des photoelastischen Koeffizienten von $0,5 \times 10^{-11}$ bis $6,0 \times 10^{-11}$ m2/N aufweist.

**6.** Laminierte optische Folie nach einem der Ansprüche 1 bis 5, wobei das Material, welches eine optisch negative, uniaxiale Eigenschaft zeigt, welches die dritte optische Folie (3) bildet, eine diskotische Flüssigkristallverbindung ist.

**7.** Laminierte optische Folie nach einem der Ansprüche 1 bis 6, wobei das Material, welches eine optisch negative, uniaxiale Eigenschaft zeigt, welches die dritte optische Folie (3) bildet, derart geneigt ist, daß die mittlere optische Achse und die Normalachse der dritten optischen Folie (3) einen Neigungswinkel in einem Bereich von 5 bis 50° bilden.

**8.** Laminierte optische Folie nach einem der Ansprüche 1 bis 7, wobei die erste optische Folie (1) mit einem kontrollierten dreidimensionalen Brechungsindex zwischen der zweiten optischen Folie (2), welche eine optisch positive, uniaxiale Eigenschaft zeigt, und der dritten optischen Folie (3), gebildet aus einem Material, welches eine optisch negative, uniaxiale Eigenschaft zeigt, angeordnet ist, geneigt ist.

**9.** Elliptisch polarisierende Platte, umfassend eine laminierte optische Folie nach einem der Ansprüche 1 bis 8 und eine polarisierende Platte.

**10.** Elliptisch polarisierende Platte nach Anspruch 9, wobei die polarisierende Platte auf der Seite der zweiten optischen Folie (2) der laminierten optischen Folie nach Anspruch 8 laminiert ist.

**11.** Bildanzeigeelement, umfassend die laminierte optische Folie nach einem der Ansprüche 1 bis 8, oder die elliptisch polarisierende Platte nach Anspruch 9 oder 10.

**Revendications**

**1.** Film optique stratifié comprenant :

un premier film optique (1) obtenu en étirant un film polymère comprenant une résine de polycarbonate et une résine de styrène,

dans lequel la valeur absolue du coefficient photoélastique est de $2,0 \times 10^{-11}$ à $6,0 \times 10^{-11}$ $m^2/N$, et l'indice de réfraction à trois dimensions est contrôlé de sorte qu'un coefficient Nz exprimé par $Nz = (nx_1 - nz_1) / (nx_1 - ny_1)$ satisfait $Nz \leq 0,9$, et le retard de front $(Re) = (nx_1 - ny_1) \times d_1$ satisfait $Re \geq 80$ nm, où la direction au même titre que l'indice de réfraction dans le plan du film étant maximum est définie comme l'axe des X, une direction perpendiculaire à l'axe des X comme l'axe des Y, la direction de l'épaisseur du film comme l'axe des Z, et où les indices de réfraction dans chaque direction axiale sont définis par $nx_1$, $ny_1$ et $nz_1$, respectivement, et l'épaisseur du film par $d_1$ (nm) ;

un deuxième film optique (2) montrant une propriété uniaxe optiquement positive qui satisfait $nx_2 > ny_2 \approx nz_2$, où la direction au même titre que l'indice de réfraction dans le plan du film est maximum est définie comme l'axe des X, une direction perpendiculaire à l'axe des X comme l'axe des Y, la direction de l'épaisseur du film comme l'axe des Z, et où les indices de réfraction dans chaque direction axiale sont définis par $nx_2$, $ny_2$ et $nz_2$, respectivement ; et

un troisième film optique (3) formé d'un matériau montrant une propriété uniaxe optiquement négative, et le matériau comprenant une partie étant alignée de manière angulaire et l'épaisseur du film est de 30 à 90 $\mu$m, dans lequel la forme du film optique stratifié est rectangulaire,

l'angle formé entre le côté plus long du film optique stratifié et l'axe d'absorption de la plaque polarisante est de $175° \pm 5°$,

l'angle formé entre le côté plus long du film optique stratifié et l'axe lent du premier film optique (1) est de $0° \pm 5°$,

l'angle formé entre le côté plus long du film optique stratifié et l'axe lent du deuxième film optique (2) est de $65° \pm 5°$,

l'angle formé entre un côté plus long du film optique stratifié et l'axe lent du troisième film optique (3) est de préférence de $90° \pm 5°$,

où les angles sont formés dans le sens inverse des aiguilles d'une montre, le côté plus long du film optique stratifié étant défini à 0°.

**2.** Film optique stratifié selon la revendication 1, dans lequel le poids moléculaire moyen en poids de la résine de styrène du premier film optique (1) est 20 000 ou moins.

**3.** Film optique stratifié selon la revendication 1 ou 2, dans lequel la température de transition vitreuse du premier film optique (1) se trouve dans une plage de 110 à 180 °C.

4. Film optique stratifié selon l'une quelconque des revendications 1 à 3, dans lequel le deuxième film optique (2) est obtenu en étirant un film polymère comprenant un polymère à base de norbornène.

5. Film optique stratifié selon l'une quelconque des revendications 1 à 3, dans lequel le second film optique (2) est obtenu en étirant un film polymère comprenant une résine de polycarbonate et une résine de styrène, ledit deuxième film optique ayant la valeur absolue du coefficient élastique de $0,5 \times 10^{-11}$ à $6,0 \times 10^{-11}$ m$^2$/N.

6. Film optique stratifié selon l'une quelconque des revendications 1 à 5, dans lequel le matériau montrant une propriété uniaxe optiquement négative formant le troisième film optique (3) est un composé de cristaux liquides discotique.

7. Film optique stratifié selon l'une quelconque des revendications 1 à 6, dans lequel le matériau montrant une propriété uniaxe optiquement négative formant le troisième film optique (3) est incliné de sorte que l'axe optique moyen et l'axe normal dudit troisième film optique (3) forment un angle d'inclinaison dans une plage de 5 à 50°.

8. Film optique stratifié selon l'une quelconque des revendications 1 à 7, dans lequel le premier film optique (1) ayant un indice de réfraction à trois dimensions contrôlé est disposé entre le second film optique (2) montrant une propriété uniaxe optiquement positive, et le troisième film optique (3) formé d'un matériau montrant une propriété uniaxe optiquement négative qui est incliné.

9. Plaque polarisante elliptique comprenant : un film optique stratifié selon l'une quelconque des revendications 1 à 8 et une plaque polarisante.

10. Plaque polarisante elliptique selon la revendication 9, la plaque polarisante étant stratifiée sur le côté du deuxième film optique (2) du film optique stratifié selon la revendication 8.

11. Dispositif d'affichage d'images comprenant le film optique stratifié selon l'une quelconque des revendications 1 à 8, ou la plaque polarisante elliptique selon la revendication 9 ou 10.

【FIG. 1】

【FIG. 2】

【FIG. 3】

【FIG. 4】

【FIG. 5】

【FIG. 6】

【FIG. 7】

【FIG. 8】

【FIG. 9】

【FIG. 10】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5157911 A
- JP 2000056131 A
- JP 5100114 A
- JP 10068816 A
- JP 10090521 A
- EP 1489437 A1
- JP 2003262721 A
- JP 2001343529 A
- WO 0137007 A